# EUROPEAN PATENT SPECIFICATION

(11) **EP 1 365 368 B1**
(45) Date of publication and mention of the grant of the patent: **31.08.2011**
(21) Application number: 02021882.2
(22) Date of filing: 30.09.2002
(51) Int. Cl.: G07F 19/00

(54) **System and method for financial transactions**
System und Verfahren für finanzielle Transaktionen
Système et procédé pour des transactions financières

(30) Priority: 23.05.2002 KR 2002028740
(43) Date of publication of application: 26.11.2003
(73) Proprietor: SK Telekom Co., Ltd., Seoul 110-110 (KR)
(72) Inventor: Choi, Seung-Jin, Yongsan-gu, Seoul (KR); Lim, Dong-Phil, Gwanjin-gu, Seoul (KR); Ahn, Sahng-Kyoo, Nowon-gu, Seoul (KR); Lee, Kyung-Bae, Eunpyeong-gu, Seoul (KR); Kim, Jae-Kwang, Songpa-gu, Seoul (KR); Shin, Sang-Hee, Saemmaeul Apt. no. 105-401, Anyang-si, Gyeonggi-do (KR); Min, Byung-Wook, Chongguvilla 3-302, no.16-1302, Gwanjin-gu, Seoul (KR)
(74) Representative: Reinhard - Skuhra - Weise & Partner GbR

(56) References cited:
- WO-A-00/31699
- WO-A-97/45814
- WO-A-98/42173

## Description

### BACKGROUND OF THE INVENTION

### 1. Field of the Intention computer.

The present invention relates to financial transactions, and in particular to a system for financial transactions which can issue accounts to subscribers of portable terminals to perform the financial transactions, including remittance, charging, settlement, escrow settlement, and collection of money between the subscribers.

### 2. Description of the Background Art

According to the development of electronic commerce using the Internet, a variety of settlement methods have been used between sellers (claimants) who intend to sell goods and clients (payers) who intend to purchase the goods. In general, the electronic commerce is generally classified into business to business (B to B), business to person (B to P) and person to person (P to P) by main groups participating in transactions.

The B to P or the P to P commerce employs settlement methods using cash, credit cards, prepaid cards and cellular phones. However, the P to P commerce cannot use the settlement methods using credit cards, prepaid cards or cellular phones, but only use the settlement method using cash.

On the other hand, in order to use the cash settlement in the B to P or the P to P commerce, a person should inconveniently carry money corresponding to a settlement price. In this case, a businessman or seller informs the buyer of an account number, and the buyer deposits money to the account, to finish the settlement.

Document WO 00/31699 A1 describes a switch which provides a user of a mobile phone with the means to conduct secure electronic transactions between a content provider and a financial institution. The switch receives transaction messages by a mobile phone and forwards the message to a financial institution in oder to instruct the financial institution to effect a financial transaction to a content provider. : Document WO 97/45814 A1 describes mobile terminals which can perform remok purchase payment transactions or transfer electronic money between themselves. The mobile terminal can be loaded with electronic money from an account on a host computer.

There is thus strong demand for a settlement method which can be commonly used in all main types of transactions. Moreover, such settlement method needs to cover all kinds of goods and services, including sales of goods.

### SUMMARY OF THE INVENTION

Accordingly, it is a primary object of the present invention to provide a system for financial transactions which can issue virtual accounts to a plurality of wireless terminal subscribers to perform financial transactions through the virtual accounts, and which can transfer money between the virtual accounts and real accounts of banks.

In order to achieve the above-described object of the invention, there is provided a transaction system for providing a financial transaction service to a subscriber with the features of claim 1. Possible embodiments are given in the dependent claims

### BRIEF DESCRIPTION OF THE DRAWINGS

The present invention will be better understood with reference to the accompanying drawings which are given only by way of illustration and thus are not limitative of the present invention, wherein:
Fig. 1 is a schematic structure view illustrating a system for financial transactions in accordance with a preferred embodiment of the present invention;
Fig. 2 is a view illustrating a structure for providing a subscriber authentication service in accordance with the preferred embodiment of the present invention;
Fig. 3 is a view illustrating a structure for providing a code issuing service in accordance with the preferred embodiment of the present invention;
Fig. 4 is a view illustrating a structure for providing a charging service in accordance with the preferred embodiment of the present invention;
Fig. 5 is a view illustrating a structure for providing a realization service in accordance with the preferred embodiment of the present invention;
Fig. 6 is a view illustrating one example of a structure for providing a remittance service in accordance with the preferred embodiment of the present invention;
Fig. 7 is a view illustrating another example of the structure for providing the remittance service in accordance with the preferred embodiment of the present invention;
Fig. 8 is a view illustrating a structure for providing a billing service in accordance with the preferred embodiment of the present invention;
Fig. 9 is a view illustrating a structure for providing a member store settlement service in accordance with the preferred embodiment of the present invention;
Fig. 10 is a view illustrating a structure for providing a member store direct payment settlement service in accordance with the preferred embodiment of the present invention;
Fig. 11 is a view illustrating a structure for providing an escrow service in accordance with the preferred embodiment of the present invention;
Fig. 12 is a view illustrating a structure for providing a subscription service in accordance with the preferred embodiment of the present invention;
Fig. 13 is a view illustrating message flow of the subscriber authentication service of Fig. 2;
Fig. 14 is a view illustrating message flow of the code issuing service of Fig. 3;
Fig. 15 is a view illustrating message flow of the charging service of Fig. 4;
Fig. 16 is a view illustrating message flow of the realization service of Fig. 5;
Fig. 17 is a view illustrating message flow of the remittance service of Fig. 6;
Fig. 18 is a view illustrating message flow of the remittance service of Fig. 7;
Fig. 19 is a view illustrating message flow of the billing service of Fig. 8;
Fig. 20 is a view illustrating message flow of the member store settlement service of Fig. 9;
Fig. 21 is a view illustrating message flow of the member store direct payment settlement service of Fig. 10;
Fig. 22 is a view illustrating message flow of the escrow service of Fig. 11;
Fig. 23 is a view illustrating message flow of the subscription service of Fig. 12;
Fig. 24 is a flowchart showing a detailed operation of a charging service unit of Fig. 4;
Fig. 25 is a flowchart showing a detailed operation of a realization service unit of Fig. 5;
Fig. 26 is a flowchart showing a detailed operation of a remittance service unit of Fig. 6;
Fig. 27 is a flowchart showing a detailed operation of a remittance service unit of Fig. 7;
Fig. 28 is a flowchart showing a detailed operation of a billing service unit of Fig. 8;
Fig. 29 is a flowchart showing a detailed operation of a member store settlement service unit of Fig. 9;
Fig. 30 is a flowchart showing a detailed operation of a member store direct payment service unit of Fig. 10;
Fig. 31 is a flowchart showing a detailed operation of an escrow service unit of Fig. 11; and
Fig. 32 is a flowchart showing a detailed operation of a subscription service unit of Fig. 12.

### DETAILED DESCRIPTION OF THE PREFERRED EMBODIMENTS

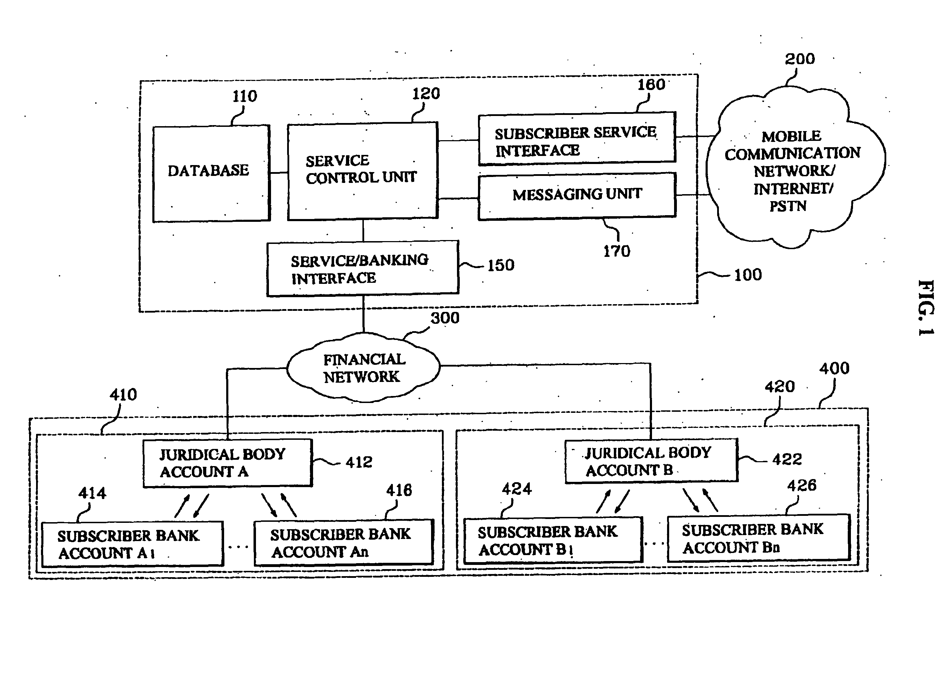

A system for financial transaction in accordance with a preferred embodiment of the present invention will now be described in detail with reference to Figs. 1 to 32.

In accordance with the present invention, mobile communication subscribers can perform the financial transactions with one another through accounts (mobile accounts) granted to each cellular phone number. Here, the subscriber who intends to (use the financial transaction) through the mobile account can charge the mobile account with cash from a bank account through a charging service. In addition, when the subscriber intends to withdraw cash from the mobile account, he/she can transfer cash from the mobile account to the bank account through a realization service.

Fig. 1 is a schematic view illustrating the system for financial transactions in accordance with the preferred embodiment of the present invention. Reference numeral 100 denotes a transaction system, 110 denotes a database, 120 denotes a service control unit, 150 denotes a service/banking interface, 160 denotes a subscriber service interface, 170 denotes a messaging unit, 200 denotes a communication network (mobile communication network/intemet/PSTN), 300 denotes a financial network, and 400 denotes an affiliated bank system.

Referring to Fig. 1, the system 100 for financial transactions includes: the service control unit 120 for processing a service; the database 110 for storing the data processed in the service control unit 120; the subscriber service interface 160 for interfacing a message between the service control unit 120 and the communication network 200, and providing a service to the subscriber; the messaging unit 170 for transmitting a message from the service control unit 120 to the subscriber through the communication network 200; and the service/banking interface 150 for interfacing a message between the service control unit 120 and the financial network 300.

The communication network 200 is composed of a mobile communication network managed by a mobile communication service provider, an Internet network for providing an Internet service, and a public switched telephone network (PSTN) for providing a public telephone service. Accordingly, the subscriber receives a service from the system 100 for financial transaction through a mobile communication terminal (cellular phone, PDA, etc.), computer or telephone.

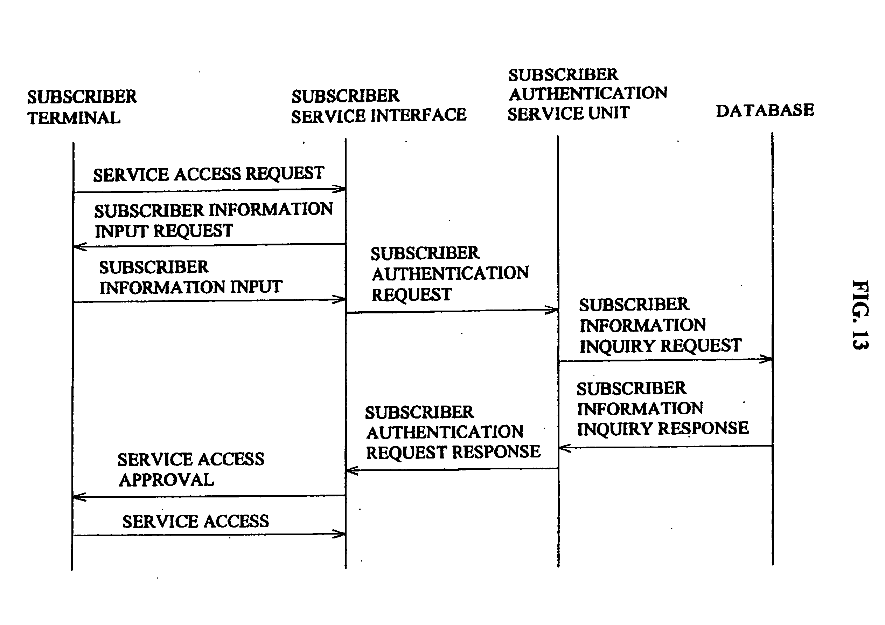

Still referring to Fig. 1, the subscriber service interface 160 includes a WAP server when the subscriber receives a wireless Internet service through the communication network 200, a web server when the subscriber receives a wire Internet service, and an Interactive Voice Response (IVR) or automatic response system (ARS) when the subscriber receives a voice service. Therefore, the subscriber service interface 160 provides a service menu to the subscriber accessing through the communication network 200. When the subscriber selects an item of the service menu, the subscriber service interface 160 transmits a message to the service control unit 120 to provide a corresponding service. In addition, when receiving a message for the corresponding service from the service control unit 120, the subscriber service interface 160 responds to the subscriber through the communication network 200. Accordingly, the subscriber service interface 160 transmits/receives a message to/from the service control unit 120 according to a protocol determined according to a service provided (refer to Figs. 13 to 23), and interfaces with the subscriber through the communication network 200 by various methods (WAP, web, voice, etc.). As a result, the service provider can constitute the subscriber service interface 160 in various forms.

The messaging unit 170 transmits the message from the service control unit 120 to the communication network 200 through an E-mail, SMS (Short Message Service), LMS (Long Message Service), or Call-back URL. The message transmitted from the messaging unit 170 is received by the subscriber terminal (cellular phone, PDA, computer, etc.) through the communication network 200. The messaging unit 170 has an E-mail server, short message service center (SMSC), long message service center (LMSC), or WAP Server.

On the other hand, the service/banking interface 150 is connected between the service control unit 120 and the financial network 300, for interfacing a banking service with the affiliated bank. A plurality of affiliated bank settlement systems 410~420 are connected to the financial network 300. Each of the bank settlement systems 410~420 provides a deposit/withdrawal settlement service between a juridical body account (virtual account) opened in a corresponding bank and the bank account of the subscriber. That is, the bank settlement system processes deposit/withdrawal transactions between the juridical body account (intermediate account) and the bank account of the subscriber upon the settlement request of the service/banking interface 150 of the financial settlement system, and transmits a processing result to the service/banking interface 150.

In addition, the database 110 includes: a subscriber database for storing information of the subscribers; an account database for storing account information of the subscribers; a transaction contents database for storing transaction contents of the subscribers, and an issued code database for storing authentication codes, subscription collection codes, billing codes, authentication contents, subscription collection contents and billing contents. Here, the subscriber database has fields such as a subscriber code, subscriber name, subscriber address, cellular phone number, user ID and password. The account database is composed of fields such as a subscriber code, mobile account number, mobile account balance, bank account number, bank and country. The transaction contents database includes fields such as a subscriber code, transaction date, transaction type, price, transaction account number and issued code. The issued code database has fields such as a code, classification, issuer code, issuing date, period, using data, processing result and contents.

The service control unit 120 processes a corresponding service upon the request of the subscriber service interface 160, and stores a result in the database 110.

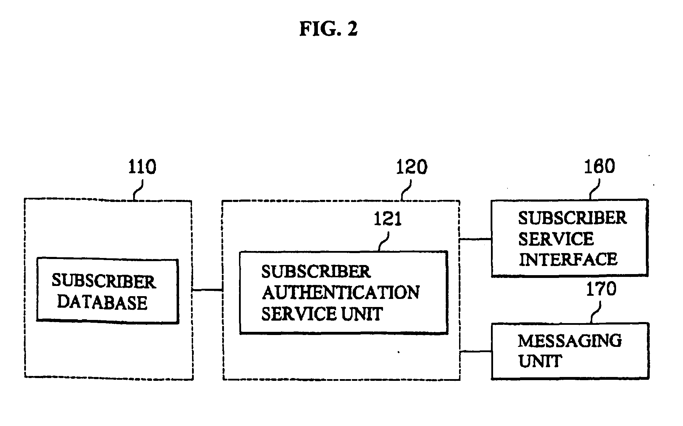

Fig. 2 is a view illustrating a structure for providing a subscriber authentication service in accordance with the preferred embodiment of the present invention. Reference numeral 110 denotes a database, 120 denotes a service control unit, 121 denotes a subscriber authentication service unit, 160 denotes a subscriber service interface, and 170 denotes a messaging unit.

As illustrated in Fig. 2, the subscriber authentication service is processed by a subscriber authentication service unit 121 of the service control unit 120. The subscriber authentication service unit 121 receives subscriber information upon the subscriber authentication request of the subscriber service interface 160, refers to a subscriber database, and performs authentication. The database 110 may include subscriber databases owned by a plurality of mobile communication service providers. Therefore, when the subscriber authentication service unit 121 receives requests from subscribers registered by the plurality of mobile communication service providers through the subscriber service interface 160, the subscriber authentication service unit 121 authenticates the subscribers through the database of the corresponding mobile communication service provider. The authenticated subscriber information is stored in the database 110 of the system for financial transactions.

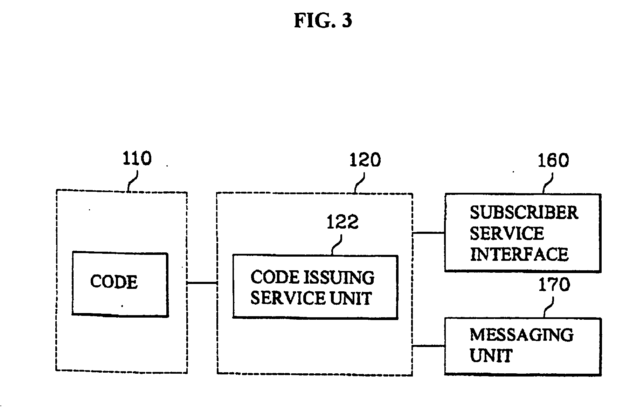

Fig. 3 is a view illustrating a structure for providing a code issuing service in accordance with the preferred embodiment of the present invention. Reference numeral 110 denotes a database, 120 denotes a service control unit, 122 denotes a code issuing service unit, 160 denotes a subscriber service interface and 170 denotes a messaging unit.

The code issuing service unit 122 is formed in the service control unit 120, for issuing codes upon the request of the subscriber service interface 160, and storing the issued codes. The code issuing service unit 122 issues an authentication code, billing code, escrow code and subscription collection code to the subscriber.

The authentication code is used when the subscriber (member store) who sells goods demands settlement on the basis of authentication information from a mobile terminal of another subscriber (client), and is granted to the mobile terminal as an one-time use code. For example, the authentication code is composed of bar codes. Accordingly, when the authentication code is transmitted from the mobile terminal to the POS terminal of the member store, the authentication information is used upon the settlement request of a member store server. The authentication code can be produced for one-time use. The billing code is issued when one subscriber claims payment to another subscriber, and may include billing contents information.

The escrow code is issued for conditional transactions between the member stores or between the member store (seller) and the subscriber. For example, when a purchaser notifies the seller reception of the goods through the escrow code, settlement is performed. In order to perform the transaction by issuing the escrow code, the seller receives the escrow code containing information on the goods, and transmits escrow information to the subscriber who intends to purchase the goods. Thereafter, the purchaser requests an escrow settlement service through the escrow code, and notify the seller arrival of the goods through the escrow code. An escrow service unit performs the escrow settlement service.

The subscription collection code is issued when the subscriber intends to collect subscriptions. Here, the subscriber receives the subscription collection code containing subscription collection contents, and provides the subscription collection code to the other subscribers wishing to subscriptions. Accordingly, the subscribers can subscribe money by using the subscription collection code of a wanted field.

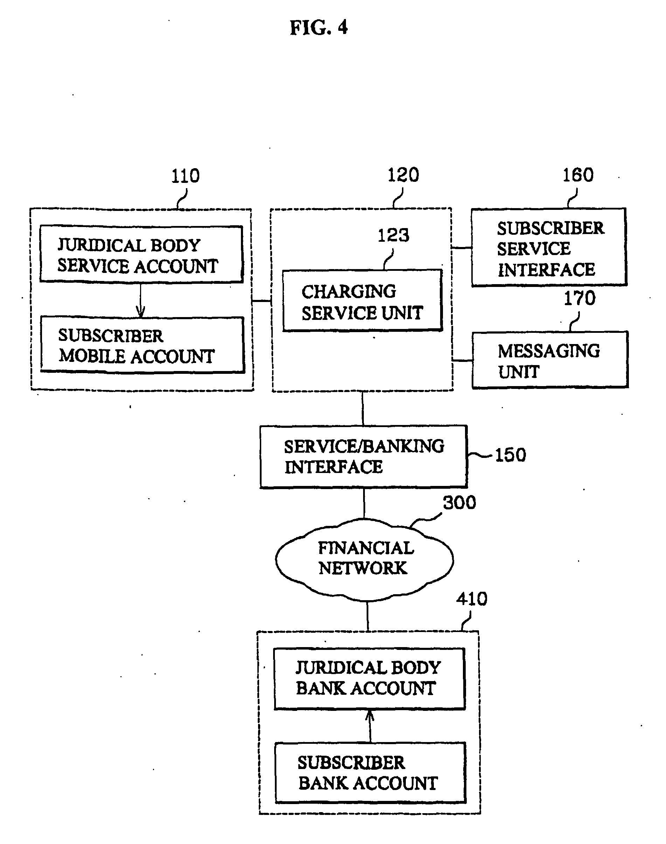

Fig. 4 is a view illustrating a structure for providing a charging service in accordance with the preferred embodiment of the present invention. Reference numeral 110 denotes a database, 120 denotes a service control unit, 123 denotes a charging service unit, 150 denotes a service/banking interface, 160 denotes a subscriber service interface, 170 denotes a messaging unit, 300 denotes a financial network, and 410 denotes a bank settlement system.

As depicted in Fig. 4, the database 110 for providing the charging service includes a juridical body service account and a mobile account of the subscriber. The juridical body service account (account of service administrator) is an intermediate account when the subscriber charges the mobile account through a bank account. In addition, the bank settlement system 410 has a juridical body bank account for transferring money between the bank account of the subscriber receiving the charging service and the account of the service administrator.

Accordingly, when the subscriber intends to charge the mobile account, the charging service unit 123 of the service control unit 120 requests to transfer of money from the bank account of the subscriber to the juridical body bank account through the bank settlement system 410. After confirming that money is deposited from the bank account of the subscriber to the juridical body bank account, the charging service unit 123 charges (deposits) a corresponding amount of money from the juridical body service account to the mobile account of the subscriber.

The service/banking interface 150 discriminates a bank included in subscriber bank account information registered in the database 110 upon the charging service request, and interfaces with the settlement system 410 of the corresponding bank to transfer money.

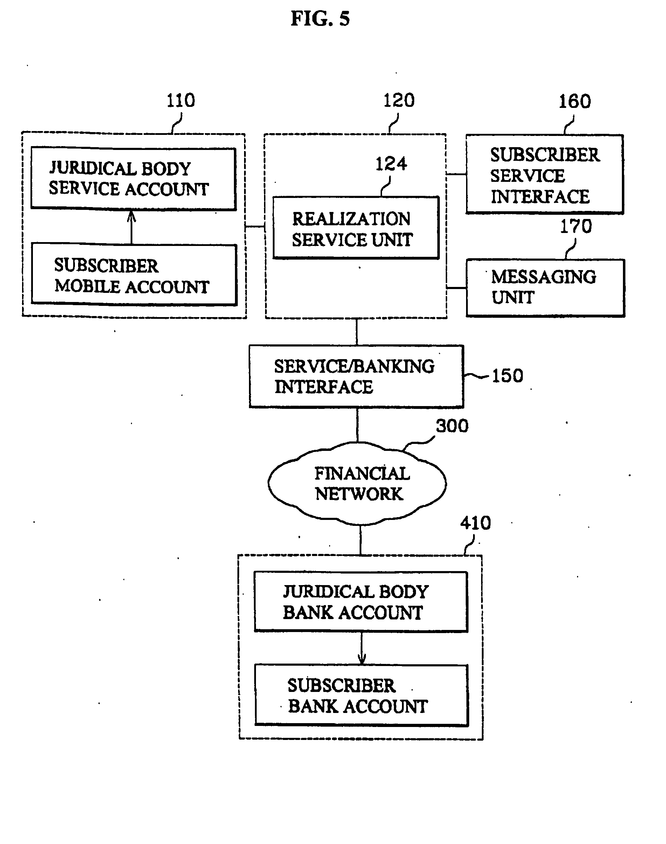

Fig. 5 is a view illustrating a structure for providing a realization service in accordance with the preferred embodiment of the present invention. Reference numeral 110 denotes a database, 120 denotes a service control unit, 124 denotes a realization service unit, 150 denotes a service/banking interface, 160 denotes a subscriber service interface, 170 denotes a messaging unit, 300 denotes a financial network, and 410 denotes a bank settlement system.

As shown in Fig. 5, the database 110 for providing the realization service includes a juridical body service account of a service administrator and a mobile account of a subscriber receiving the realization service. The bank settlement system 410 has a juridical body bank account for transferring money between the bank account of the subscriber receiving the realization service and the account of the service administrator.

When the subscriber intends to realize money from the mobile account to the bank account, the realization service unit 124 judges whether realization money requested by the subscriber exists in the mobile account of the subscriber. Here, when realization money exists in the mobile account of the subscriber, the realization service unit 124 withdraws money from the mobile account of the subscriber, and deposits money to the juridical body service account. In addition, the realization service unit 124 demands the bank settlement system 410 through the service/banking interface 150 to transfer realization money from the juridical body bank account to the bank account of the subscriber.

The service/banking interface 150 discriminates a bank included in subscriber bank account information registered in the database 110 upon the realization service request, and interfaces with the settlement system 410 of the corresponding bank to transfer money.

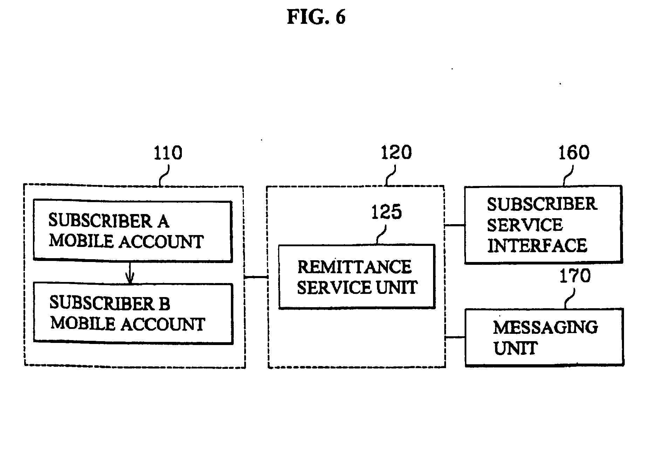

Fig. 6 is a view illustrating one example of a structure for providing a remittance service in accordance with the preferred embodiment of the present invention. Reference numeral 110 denotes a database, 120 denotes a service control unit, 125 denotes a remittance service unit, 160 denotes a subscriber service interface, and 170 denotes a messaging unit.

Referring to Fig. 6, the database 110 for providing the remittance service is composed of a mobile account (subscriber A mobile account) of a subscriber who requests remittance and a mobile account (subscriber B mobile account) of a subscriber who receives money.

The subscriber requesting the remittance service receives the remittance service through the subscriber service interface 160, and the subscriber receiving money receives a message through the messaging unit 170.

The remittance service unit 125 receives a remittance service request from the subscriber service interface 160, and confirms the balance of the mobile account of the subscriber requesting the remittance service. When remittance money exists in the mobile account of the subscriber requesting the remittance service, the remittance service unit 125 withdraws remittance money from the mobile account of the subscriber requesting the remittance service, and deposits it to the mobile account of the subscriber receiving money.

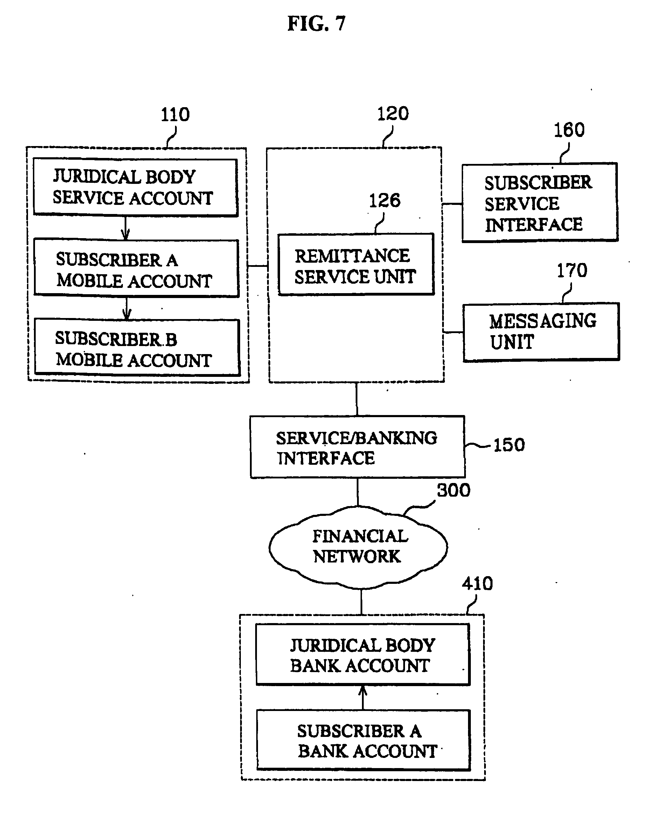

Fig. 7 is a view illustrating another example of the structure for providing the remittance service in accordance with the preferred embodiment of the present invention. Reference numeral 110 denotes a database, 120 denotes a service control unit, 126 denotes a remittance service unit, 150 denotes a service/banking interface unit, 160 denotes a subscriber service interface, 170 denotes a messaging unit, 300 denotes a financial network, and 410 denotes a bank settlement system.

In the case that remittance money does not exist in a mobile account of a subscriber requesting the remittance service, the mobile account of the subscriber is charged with money from a bank account of the subscriber for remittance.

As illustrated in Fig. 7, the database 110 for providing the remittance service has a juridical body service account, a mobile account (subscriber A mobile account) of a subscriber who requests remittance and a mobile account (subscriber B mobile account) of a subscriber who receives money. The bank settlement system 410 includes a juridical body bank account and a bank account (subscriber A bank account) of the subscriber requesting the remittance.

When the subscriber requests remittance, the remittance service unit 126 confirms the balance of the mobile account (subscriber A mobile account) of the subscriber. Here, when remittance money does not exist, the remittance service unit 126 demands the bank settlement system 410 through the service/banking interface unit 150 to deposit remittance money from the bank account (subscriber A bank account) of the subscriber requesting the remittance to the juridical body bank account. Thereafter, when remittance money is deposited from the bank account of the subscriber to the juridical body bank account, the remittance service unit 126 transfers it from the juridical body bank account to the subscriber A mobile account. Finally, the remittance service unit 126 withdraws remittance money from the mobile account (subscriber A mobile account) of the subscriber requesting the remittance service, and deposits it to the mobile account of the subscriber.

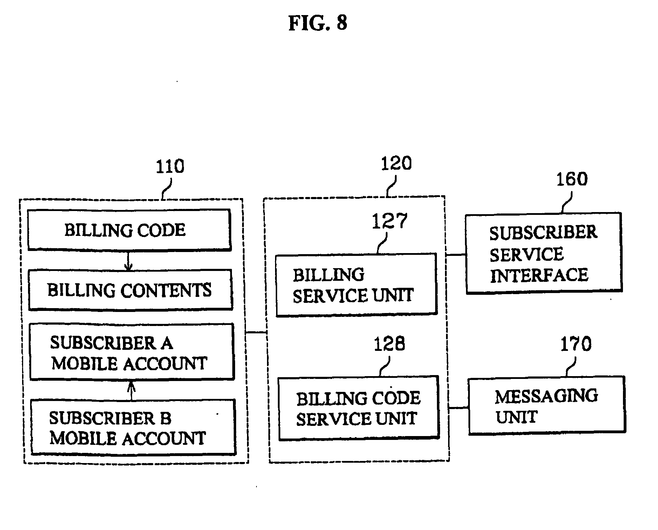

Fig. 8 is a view illustrating a structure for providing a billing service in accordance with the preferred embodiment of the present invention. Reference numeral 110 denotes a database, 120 denotes a service control unit, 127 denotes a billing service unit, 160 denotes a subscriber service interface, and 170 denotes a messaging unit.

As shown in Fig. 8, the database 110 for providing the billing service includes a billing code for classifying claims, billing contents for storing claim contents, a mobile account (subscriber A mobile account) of a subscriber who claims payment, and a mobile account (subscriber B mobile account) of a subscriber who settles an account according to the billing contents. The service control unit 120 for providing the billing service has a billing service unit 127 and a billing code service unit 128.

The subscriber who intends to claim payment through the billing service accesses through the subscriber service interface 160 and requests the billing service. The billing code service unit 128 of the service control unit 120 refers to the database 110, issues a specific billing code, and stores the billing code with billing contents. Then, the billing code service unit 128 transmits the billing contents to a receiver (subscriber) through the messaging unit 170.

When the subscriber receiving the billing contents intends to settle an account, the subscriber requests the billing service through the subscriber service interface 160. The billing service unit 127 of the service control unit 120 extracts the corresponding billing contents from the database 110 on the basis of the billing code, and enables the subscriber to settle the account. That is, the billing service unit 127 extracts billing money from the billing contents, and transfers billing money from the mobile account (subscriber B mobile account) of the subscriber settling the account to the mobile account (subscriber A mobile account) of the subscriber claiming payment.

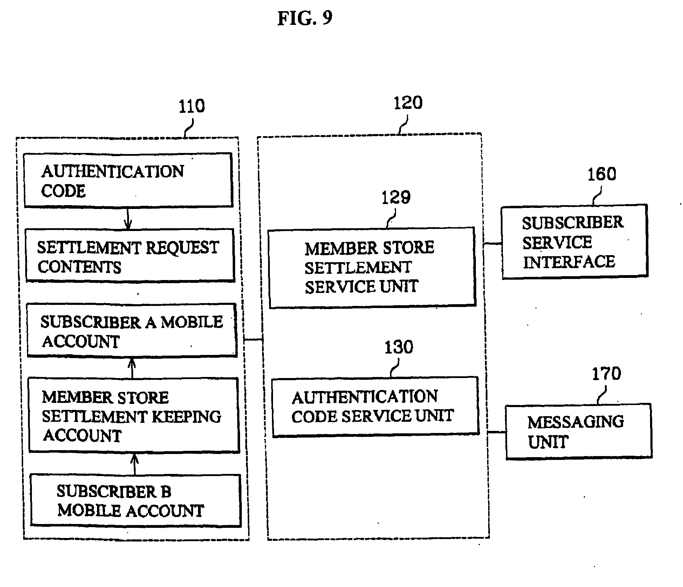

Fig. 9 is a view illustrating a structure for providing a member store settlement service in accordance with the preferred embodiment of the present invention. Reference numeral 110 denotes a database, 120 denotes a service control unit, 128 denotes a member store settlement service unit, 160 denotes a subscriber service interface, and 170 denotes a messaging unit.

A subscriber who intends to purchase goods is provided with an authentication code. When a subscriber who intends to sell the goods receives the authentication code from the subscriber who intends to purchase the goods and requests the member store settlement service, the subscriber who intends to purchase the goods temporarily settles an account, and the settlement is finished after a setup date. The authentication code, which may include numbers, characters or bar codes, is stored in a portable terminal of the subscriber and transmitted to the subscriber who intends to sell the goods.

As shown in Fig. 9, the database 110 for providing the member store settlement service has an authentication code issued to a subscriber who intends to settle an account, settlement request contents requested by a member store for settlement, a mobile account (subscriber B mobile account) of the subscriber who intends to settle the account, a member store settlement keeping account for temporarily keeping settlement money, and depositing it to an account of the member store, and the account (subscriber A mobile account) of the member store which requests the settlement.

The subscriber who intends to purchase the goods accesses the subscriber service interface 160 and requests an authentication code. The authentication code service unit 130 of the service control unit 120 refers to the database 110, generates a new authentication code, and transmits it to the mobile terminal of the subscriber.

Thereafter, the member store (subscriber) which is intends to sell the goods receives the authentication code from the subscriber who intends to purchase the goods, adds the authentication code to the settlement request contents through the subscriber service interface 160, and requests the member store settlement service. The settlement service unit 129 confirms whether the received authentication code is stored in the database 110, and performs the settlement when it is valid.

In the case that settlement money exists in the mobile account (subscriber B mobile account) of the subscriber who intends to settle the account, the member store settlement service unit 129 withdraws settlement money from the subscriber B mobile account, and transfers it to the member store settlement keeping account. Then, settlement money is kept for a setup period (for example, 3 days) and then deposited to the member store account (subscriber A mobile account).

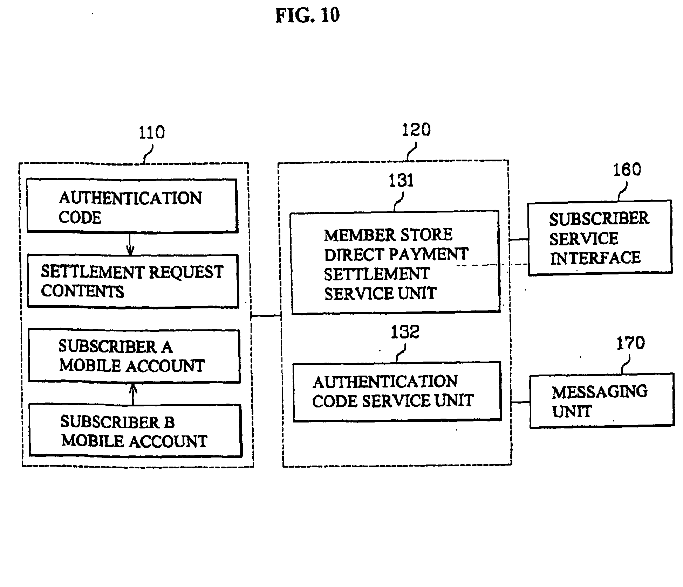

Fig. 10 is a view illustrating a structure for providing a member store direct payment settlement service in accordance with the preferred embodiment of the present invention. Reference numeral 110 denotes a database, 120 denotes a service control unit, 131 denotes a member store direct payment settlement service unit, 160 denotes a subscriber service interface, and 170 denotes a messaging unit.

A subscriber who intends to purchase goods is provided with an authentication code. When a subscriber who intends to sell the goods receives the authentication code from the subscriber who intends to purchase the goods and requests the member store settlement service, the subscriber who intends to purchase the goods directly settles an account. The authentication code in which may include numbers, characters or bar codes is stored in a portable terminal of the subscriber and transmitted to the subscriber who intends to sell the goods.

As depicted in Fig. 10, the database 110 for providing the member store direct payment settlement service has an authentication code issued to a subscriber who intends to settle an account, settlement request contents requested by a member store for settlement, a mobile account (subscriber A mobile account) of the subscriber who intends to settle the account, and a mobile account (subscriber B mobile account) of the member store which requests the settlement.

The subscriber who intends to purchase the goods accesses the subscriber service interface 160 and requests an authentication code. The authentication code service unit 132 of the service control unit 120 refers to the database 110, generates a new authentication code, and transmits it to the mobile terminal of the subscriber.

Thereafter, the member store (subscriber) which intends to sell the goods receives the authentication code from the subscriber who intends to purchase the goods, adds the authentication code to the settlement request contents through the subscriber service interface 160, and requests the member store direct payment settlement service. The member store direct payment settlement service unit 131 confirms whether the received authentication code is stored in the database 110, and performs the settlement when it is valid.

In the case that settlement money exists in the mobile account (subscriber B mobile account) of the subscriber who intends to settle the account, the member store direct payment settlement service unit 131 withdraws settlement money from the subscriber B mobile account, and transfers it to the mobile account (subscriber A mobile account) of the member store subscriber.

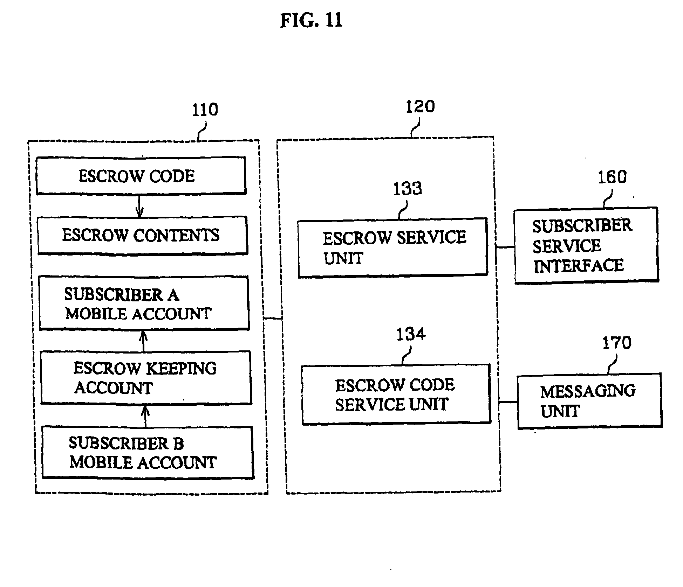

Fig. 11 is a view illustrating a structure for providing an escrow service in accordance with the preferred embodiment of the present invention. Reference numeral 110 denotes a database, 120 denotes a service control unit, 130 denotes an escrow service unit, 160 denotes a subscriber service interface, and 170 denotes a messaging unit.

Here, a subscriber who intends to purchase goods and a subscriber who intends to sell the goods can perform conditional transactions. The subscriber who intends to sell the goods notifies contents of the goods and an escrow code to the subscriber who intends to purchase the goods. The subscriber who intends to purchase the goods request settlement through the escrow code. Here, the settlement process is temporarily maintained in an escrow account. Thereafter, the subscriber who intends to sell the goods delivers the goods to the subscriber who intends to purchase the goods. When the subscriber who intends to purchase the goods notifies the seller reception of the goods through the escrow code, the settlement is performed from the escrow account to the account of the subscriber who intends to sell the goods.

As illustrated in Fig. 11, the database 110 for providing the escrow service has an escrow code issued to a subscriber, escrow contents corresponding to the escrow code, a mobile account (subscriber A mobile account) of the subscriber who requests settlement for the escrow service, a mobile account (subscriber B mobile account) of the subscriber who intends to settle an account for the escrow service, and an escrow account for temporarily storing escrow settlement money.

A member store which intends to sell goods through the escrow service requests an escrow code through the subscriber service interface 160. An escrow code service unit 134 refers to the database 110, generates a specific escrow code, and transmits it to the member store. The escrow code and escrow contents are stored in the database 110. The member store transmits the escrow code to a subscriber who intends to purchase the goods.

The subscriber who intends to purchase the goods accesses the subscriber service interface 160 to settle an account through the escrow code. An escrow service unit 133 inquires the escrow code inputted by the subscriber who intends to purchase the goods from the database, and executes the settlement according to the escrow contents. That is, the escrow service unit 133 confirms the balance of the mobile account (subscriber B mobile account) of the subscriber who intends to purchase the goods in order to perform the settlement according to the escrow contents. When the balance is sufficient, the escrow service unit 133 withdraws settlement money, and transfers it to the escrow account.

When the subscriber who intends to purchase the goods receives the goods, he/she accesses the subscriber service interface 160 and notifies reception of the goods to complete the settlement. Then, the escrow service unit 133 withdraws money kept in the escrow account, and transfers it to the member store account (subscriber A mobile account).

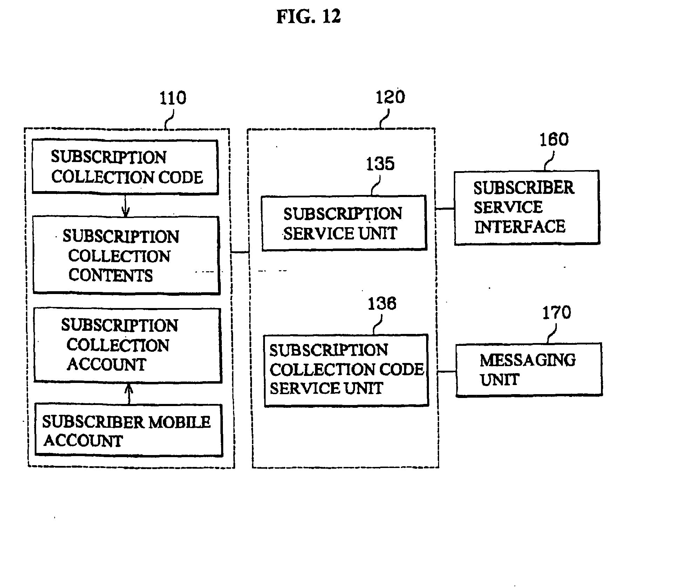

Fig. 12 is a view illustrating a structure for providing a subscription service in accordance with the preferred embodiment of the present invention. Reference numeral 110 denotes a database, 120 denotes a service control unit, 135 denotes a subscription service unit, 160 denotes a subscriber service interface, and 170 denotes a messaging unit.

In order to collect subscriptions, a subscriber who intends to collect subscriptions receives a subscription collection code, and provides the subscription collection code to a plurality of subscribers willing to purchase subscriptions.

The database 110 for providing the subscription service has a subscription collection code issued to a subscriber who intends to collect subscriptions, a subscription collection account of the subscriber receiving the subscription collection code, and a mobile account of a subscriber who intends to purchase subscriptions.

The subscriber who intends to collect subscriptions accesses the subscriber service interface 160 and requests a subscription collection code. A subscription collection code service unit 136 refers to the database 110, issues a specific subscription collection code, and transmits it to the subscriber. The issued subscription collection code is stored in the database 110.

The subscriber who intends to purchase subscriptions accesses the subscriber service interface 160, requests the subscription service, and inputs the subscription collection code. The subscription service unit 135 withdraws subscription money set up according to the subscription collection code from a mobile account of the subscriber who intends to purchase subscriptions, and deposits it to the subscription collection account.

Fig. 13 is a view illustrating message flow of the subscriber authentication service of Fig. 2.

The subscriber who intends to purchase subscriptions accesses the subscriber service interface 160 through the subscriber terminal and requests the service. In order to authenticate the subscriber, the subscriber service interface 160 demands the subscriber terminal to input the subscriber information. Here, the subscriber information inputted by the subscriber through the subscriber terminal is transmitted to the subscriber service interface 160.

The subscriber service interface 160 transmits a subscriber authentication request message to the subscriber authentication service unit 121 to authenticate the subscriber on the basis of the subscriber information transmitted from the subscriber terminal. The subscriber authentication service unit 121 extracts the subscriber information from the subscriber authentication request message, and transmits a subscriber information inquiry request message to the database 110. The database 110 transmits a subscriber information inquiry response message upon the request of the subscriber authentication service unit 121. At this time, the subscriber authentication service unit 121 judges whether the subscriber information is normally registered according to the subscriber information inquiry response message from the database 110.

Thereafter, the subscriber authentication service unit 121 transmits a subscriber authentication request response message to the subscriber service interface 160 so as to authenticate the subscriber. The subscriber service interface 160 authenticates access of the subscriber terminal according to the subscriber authentication request response message, and the subscriber terminal accesses the subscriber service interface 160 to use the service.

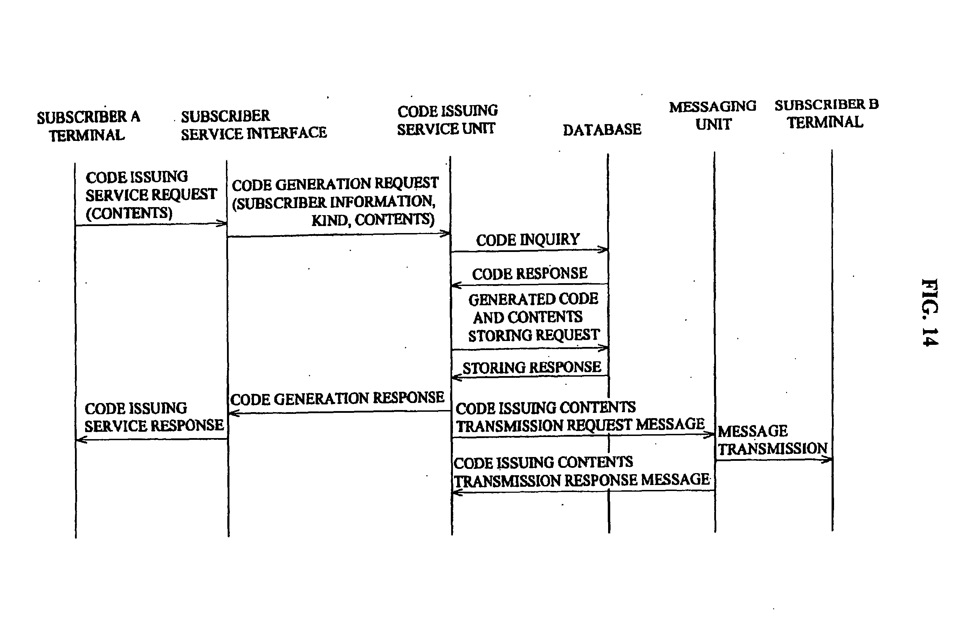

Fig. 14 is a view illustrating message flow of the code issuing service of Fig. 3.

The subscriber accesses the subscriber service interface 160 through the subscriber terminal and requests the code issuing service. Here, the subscriber inputs a kind of code (authentication code, billing code, escrow code, subscription collection code, etc) and contents information.

The subscriber service interface 160 transmits a code generation request message to the code issuing service unit 122 of the service control unit 120 on the basis of the information inputted by the subscriber. The code generation request message contains subscriber information, code kind and contents. The code issuing service unit 122 refers to the database to generate a specific code according to the code generation request message. After generating the specific code, the code issuing service unit 122 stores it in the database 110 with the contents existing in the code generation request message.

Thereafter, the code issuing service unit 122 adds the generated code to a code generation response message, and transmits it to the subscriber service interface 160. The subscriber service interface 160 transmits the code of the code generation response message to the subscriber terminal. Here, the subscriber service interface 160 outputs the code to the subscriber terminal in form of characters, data, bar code or voice.

On the other hand, when the code is the billing code (when a receiver is designated), the code issuing service unit 122 transmits a code issuing contents transmission request message to the messaging unit 170 on the basis of the receiver information included in the billing contents. The messaging unit 170 transmits the message to the subscriber terminal through an E-mail or SMS according to the code issuing contents transmission request message from the code issuing service unit 122. When transmission of the message is finished, the messaging unit 170 transmits a code issuing contents transmission response message to the code issuing service unit 122.

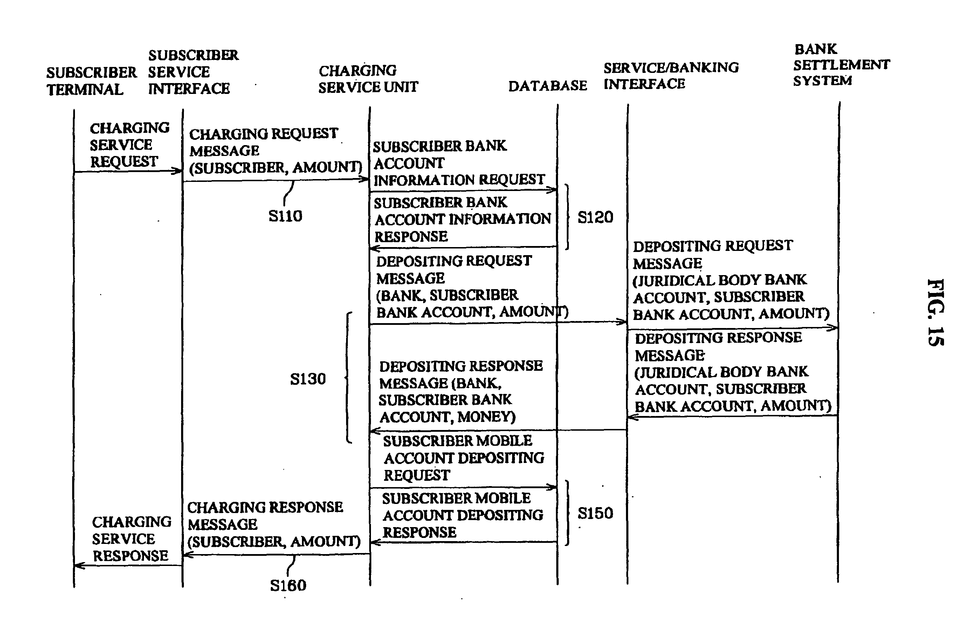

Fig. 15 is a view illustrating message flow of the charging service of Fig. 4.

The subscriber accesses the subscriber service interface 160 through the subscriber terminal and requests the charging service. Here, the subscriber inputs a cellular phone number, user ID, password and charging money. The cellular phone number can be replaced with an E-mail address, resident registration number, or license number for identifying the subscriber.

The subscriber service interface 160 transmits a charging request message to the charging service unit 123 on the basis of the input information (S110). The charging service unit 123 demands the bank account information of the subscriber from the database 110 according to the subscriber information included in the charging request message. The database 110 extracts the bank account information of the subscriber, and transmits it to the charging service unit 123 (S120).

The charging service unit 123 transmits a deposit request message to the service/banking interface 150 in order to deposit charging money from the bank account of the subscriber to the juridical body bank account of the administrator according to the bank account information of the subscriber extracted from the database. The service/banking interface 150 extracts the bank information included in the deposit request message, and transmits the deposit request message to the settlement system of the corresponding bank. The bank settlement system transfers money upon the request of the service/banking interface 150, and transmits a processing result to the service/banking interface 150 through a deposit response message.

In addition, the service/banking interface 150 transmits the received information to the charging service unit 123 through the deposit response message. The charging service unit 123 receives the deposit response message, and deposits money to the mobile account of the subscriber when money is normally deposited from the bank account of the subscriber to the juridical body bank account. That is, the charging service unit 123 extracts charging money from the juridical body service account of the database 110, and deposits it to the mobile account of the subscriber (S150).

When charging of the mobile account of the subscriber is finished, the charging service unit 123 transmits a charging response message to the subscriber service interface 160 to notify the charging result (S160). The subscriber service interface 160 responds to the subscriber terminal according to the charging response message.

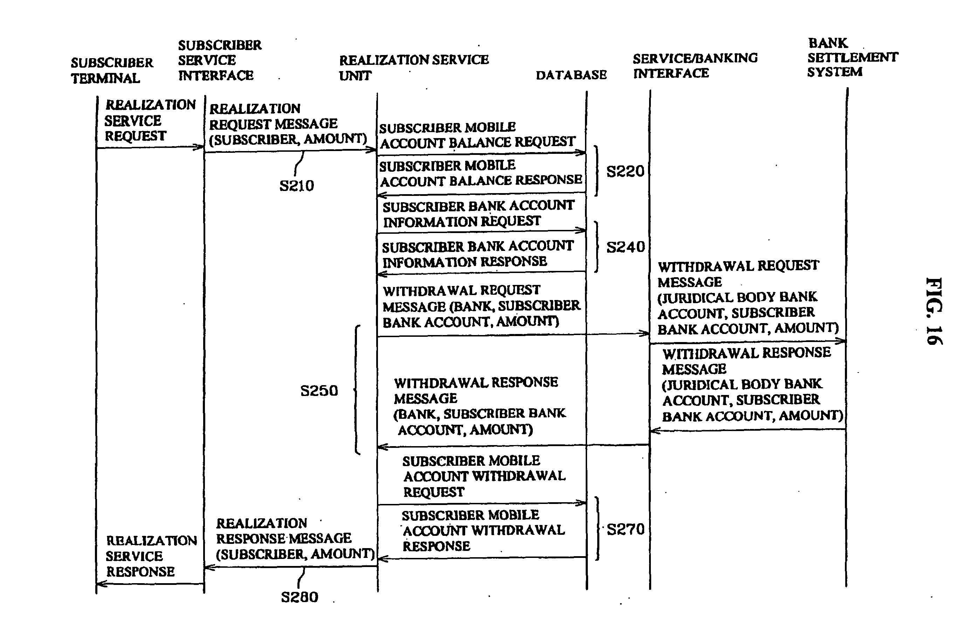

Fig. 16 is a view illustrating message flow of the realization service of Fig. 5.

The subscriber accesses the subscriber service interface 160 through the subscriber terminal and requests the realization service. Here, the subscriber inputs a cellular phone number, user ID, password and realization amount. The subscriber service interface 160 transmits a realization request message to the realization service unit 124 on the basis of the input information (S210). The realization service unit 124 inquires the balance of the mobile account of the subscriber from the database 110 according to the subscriber information included in the realization request message (S220). When the balance of the mobile account of the subscriber is sufficient for the realization service, the realization service unit 124 inquires the bank account information of the subscriber from the database 110 (S240).

The realization service unit 124 transmits a withdrawal request message to the service/banking interface 150 in order to deposit realization money from the juridical body bank account to the bank account of the subscriber on the basis of the bank account information of the subscriber extracted from the database. The service/banking interface 150 extracts the bank information included in the withdrawal request message, and transmits the withdrawal request message to the settlement system of the corresponding bank to withdraw money. The bank settlement system transfers realization money from the juridical body bank account to the bank account of the subscriber upon the request of the service/banking interface 150, and transmits a result to the service/banking interface 150 through a withdrawal response message.

The service/banking interface 150 transmits the received information to the realization service unit 124 through the withdrawal response message. The realization service unit 124 receives the withdrawal response message, withdraws realization money from the mobile account of the subscriber, and deposits it to the juridical body service account (S270).

When realization of the mobile account of the subscriber is finished, the realization service unit 124 transmits a realization response message to the subscriber service interface 160 to notify the realization result (S280). The subscriber service interface 160 responds to the subscriber terminal according to the realization response message.

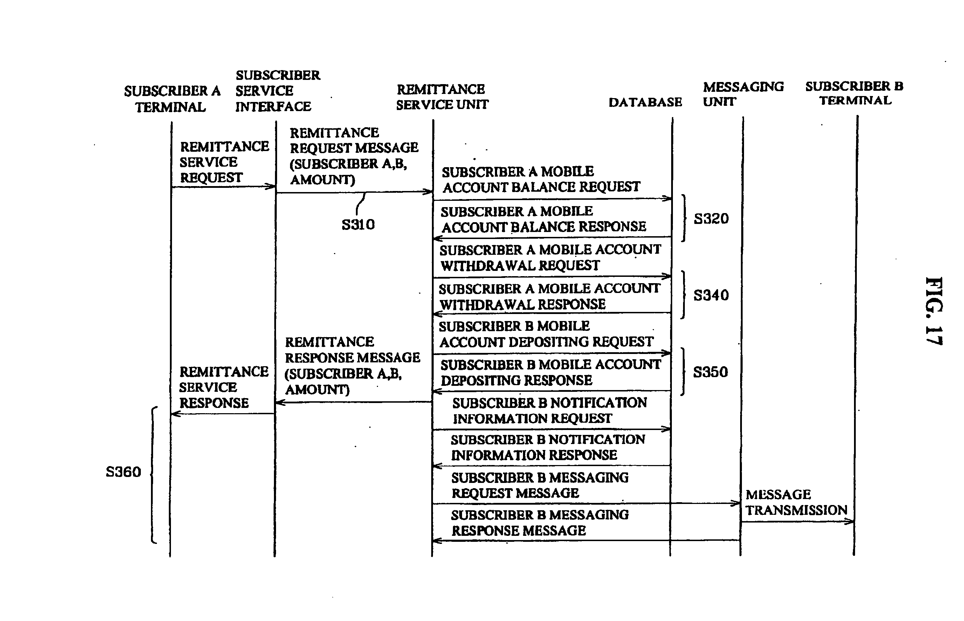

Fig. 17 is a view illustrating message flow of the remittance service of Fig. 6. Here, it is presumed that the mobile account of the subscriber who intends to remit money has sufficient balance to perform the remittance service.

The subscriber accesses the subscriber service interface 160 through the subscriber terminal and requests the remittance service. Here, the subscriber inputs a cellular phone number, user ID, password and remittance amount. The subscriber service interface 160 transmits a remittance request message to the remittance service unit 125 on the basis of the input information (S310). The remittance service unit 125 inquires the balance of the mobile account of the subscriber from the database 110 according to the subscriber information included in the remittance request message (S320). When the balance of the mobile account of the subscriber is sufficient for the remittance service, the remittance service unit 125 withdraws remittance money from the database 110 (S340).

The remittance service unit 125 deposits remittance money to the mobile account of the subscriber who receives money (S350), and transmits a remittance result to the subscriber service interface 160 through a remittance response message. The subscriber service interface 160 responds to the subscriber terminal according to the remittance response message.

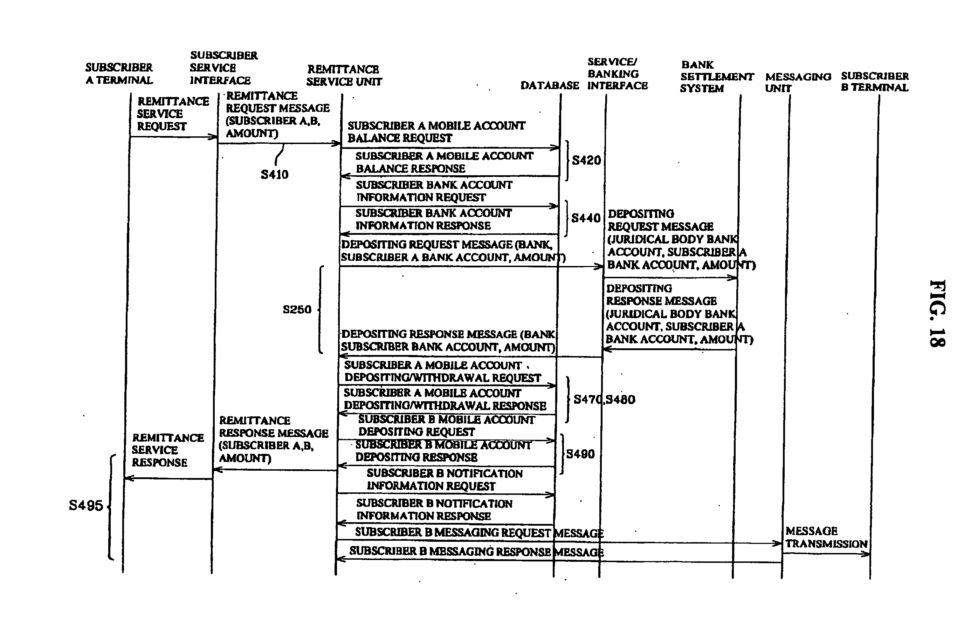

Fig. 18 is a view illustrating message flow of the remittance service of Fig. 7. Here, it is presumed that the mobile account of the subscriber who intends to remit money does not have sufficient balance to perform the remittance service.

The subscriber accesses the subscriber service interface 160 through the subscriber terminal and requests the remittance service. Here, the subscriber inputs a cellular phone number, user ID, password and remittance amount. The subscriber service interface 160 transmits a remittance request message to the remittance service unit 126 on the basis of the input information (S410). The remittance service unit 126 inquires the balance of the mobile account of the subscriber from the database 110 according to the subscriber information included in the remittance request message (S420).

When the balance of the mobile account of the subscriber is not sufficient for the remittance service, the remittance service unit 126 inquires the bank account information of the subscriber from the database 110 (S440). In addition, the remittance service unit 126 transmits a deposit request message to the service/banking interface 150 in order to deposit remittance money from the bank account of the subscriber to the juridical body bank account. The deposit request message contains the subscriber bank account, bank and amount information. The service/banking interface 150 transmits the deposit request message to the settlement system 410 of the corresponding bank according to the bank information included in the deposit request message. The bank settlement system 410 deposits money from the bank account of the subscriber to the juridical body bank account according to the deposit request message, and transmits a result to the service/banking interface 150 (S250). To transfer money from the bank account to the mobile account when the balance of the mobile account of the subscriber is deficient is called automatic charging.

Thereafter, the service/banking interface 150 transmits a depositing response message received from the bank settlement system 410 to the remittance service unit 126. The remittance service unit 126 receives the deposit response message, and processes deposit/withdrawal of the mobile account of the subscriber when money is normally deposited from the bank account of the subscriber to the juridical body bank account (S470 and S480). The remittance service unit 126 transfers money from the mobile account (subscriber A mobile account) of the subscriber who intends to remit money to the mobile account (subscriber B mobile account) of the subscriber who receives money (S490).

The remittance service unit 126 transmits a remittance response message to the subscriber service interface 160. The subscriber service interface 160 responds to the subscriber terminal according to the remittance response message.

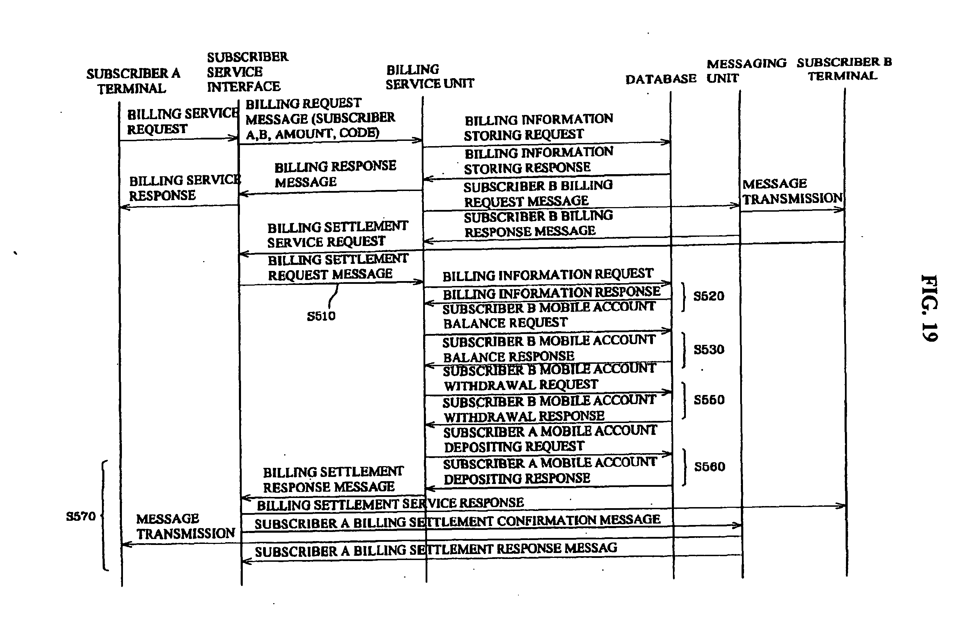

Fig. 19 is a view illustrating message flow of the billing service of Fig. 8.

Here, subscriber A who intends to bill payment receives a billing code and stores billing contents corresponding to the billing code, and subscriber B who intends to settle an account settles the account according to the billing code.

Subscriber B accesses the subscriber service interface 160 through the subscriber B terminal and requests the billing service. Here, the subscriber inputs a cellular phone number, user ID, password and billing code. The subscriber service interface 160 transmits a billing settlement request message to the billing service unit 127 on the basis of the input information (S510). The billing service unit 127 inquires information on the billing contents from the database 110 according to the billing code included in the billing settlement request message (S520).

The billing service unit 127 extracts billing amount from the billing contents, and confirms the balance of the mobile account of subscriber B (S530). In the case that the balance of the mobile account of subscriber B is sufficient for the billing service, the billing service unit 127 withdraws billing money from the mobile account of subscriber B, and deposits it to the mobile account of subscriber A (S550 and S560). Here, when the balance of the mobile account of subscriber B is deficient, the automatic charging is performed as shown in Fig. 18.

The billing service unit 127 transmits a billing settlement response message to the subscriber service interface 160. The subscriber service interface 160 responds to the subscriber terminal according to the billing settlement response message.

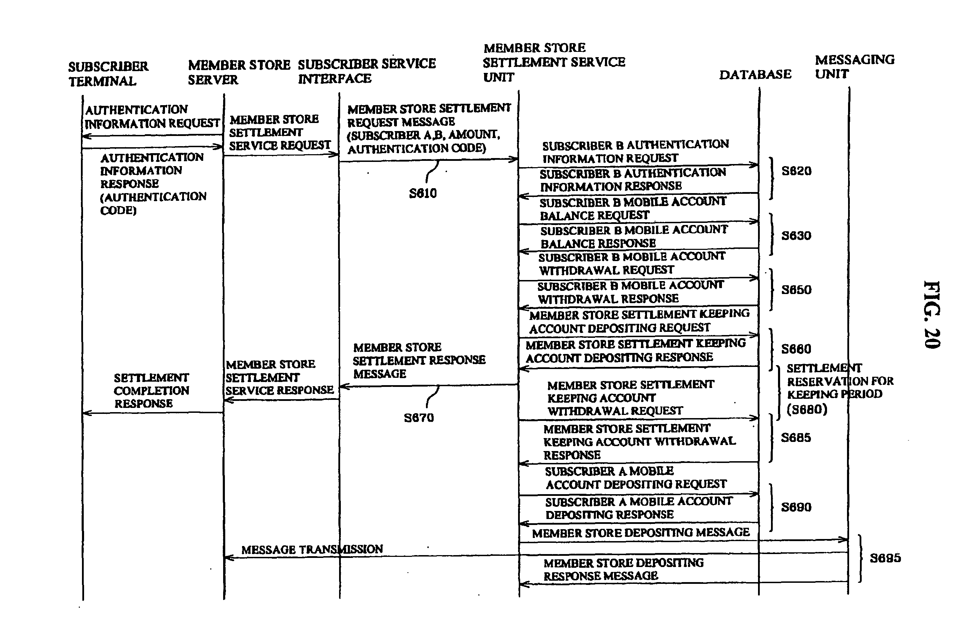

Fig. 20 is a view illustrating message flow of the member store settlement service of Fig. 9.

At this time, the member store subscriber (subscriber A) who intends to sell goods receives an authentication code from the subscriber (subscriber B) who intends to purchase the goods, and requests settlement on the basis of the authentication code. In addition, settlement money from subscriber B is hold for a predetermined holding period, and then transferred to the account of subscriber A.

The member store subscriber accesses the subscriber service interface 160 through a member store server (subscriber terminal) and requests the member store settlement service. Here, the member store server transmits a cellular phone number of the subscriber, a user ID, a password, an authentication code of the subscriber who intends to settle an account, settlement request money, and settlement contents information to the subscriber service interface 160. The subscriber service interface 160 transmits a member store settlement request message to the member store settlement service unit 129 on the basis of the input information (S610).

The member store settlement service unit 129 refers to the database 110 to judge whether the authentication code included in the member store settlement request message is valid (S620). When the authentication code is valid, the member store settlement service unit 129 confirms the balance of the mobile account of subscriber B (S630). When the balance is sufficient, the member store settlement service unit 129 withdraws settlement money from the mobile account of subscriber B and temporarily holds it in the member store settlement keeping account (S660). Here, when the balance of the mobile account of subscriber B is deficient, the automatic charging is performed as shown in Fig. 18.

In addition, the member store settlement service unit 129 transmits a member store settlement response message to the subscriber service interface 160 (S670). The subscriber service interface 160 transmits the member store settlement service response message to the member store server.

On the other hand, the member store settlement service unit 129 deposits settlement money to the mobile account of subscriber A after a predetermined holding period (for example, 3 days). That is, the member store settlement service unit 129 refers to the member store settlement keeping account, withdraws the balance of the member store settlement keeping account after the holding period (S685), and deposits it to the mobile account of subscriber A (S690). Thereafter, the member store settlement service unit 129 transmits a mobile account depositing message to the messaging unit 170 to notify the seller that the settlement is finished. The messaging unit 170 transmits a corresponding message to the member store server, and also transmits a member store depositing response message to the member store settlement service unit 129 (S695).

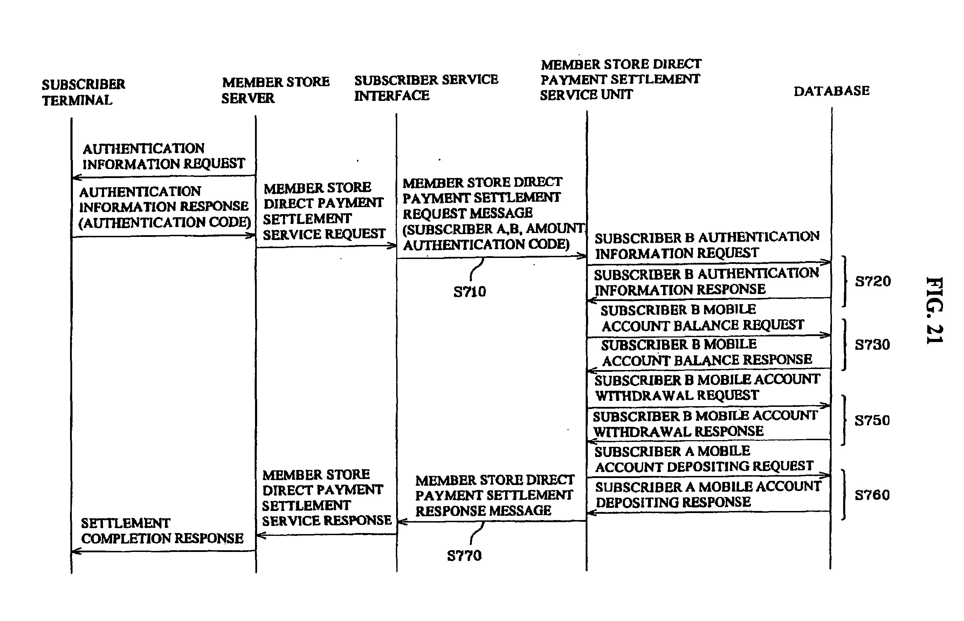

Fig. 21 is a view illustrating message flow of the member store direct payment settlement service of Fig. 10.

Here, the member store subscriber (subscriber A) who intends to sell goods receives an authentication code from the subscriber (subscriber B) who intends to purchase the goods, and requests settlement on the basis of the authentication code. In addition, settlement money from subscriber B is directly deposited to the account of subscriber A.

The member store subscriber accesses the subscriber service interface 160 through a member store server (subscriber terminal) and requests the member store direct payment settlement service. Here, the member store server transmits a cellular phone number of the subscriber, a user ID, a password, an authentication code of the subscriber who intends to settle an account, settlement request amount, and settlement contents information to the subscriber service interface 160. The subscriber service interface 160 transmits a member store direct payment settlement request message to the member store direct payment settlement service unit 131 on the basis of the input information (S710).

Thereafter, the member store direct payment settlement service unit 131 refers to the database 110 to judge whether the authentication code included in the member store direct payment settlement request message is valid (S720). When the authentication code is valid, the member store direct payment settlement service unit 131 confirms the balance of the mobile account of subscriber B (S730). When the balance is sufficient, the member store direct payment settlement service unit 131 withdraws settlement money from the mobile account of subscriber B (S750), and deposits it to the mobile account of subscriber A (S760). Here, when the balance of the mobile account of subscriber B is deficient, the automatic charging is performed as shown in Fig. 18.

The member store direct payment settlement service unit 131 transmits a member store direct payment settlement response message to the subscriber service interface 160 (S770). The subscriber service interface 160 transmits the member store direct payment settlement service response message to the member store server.

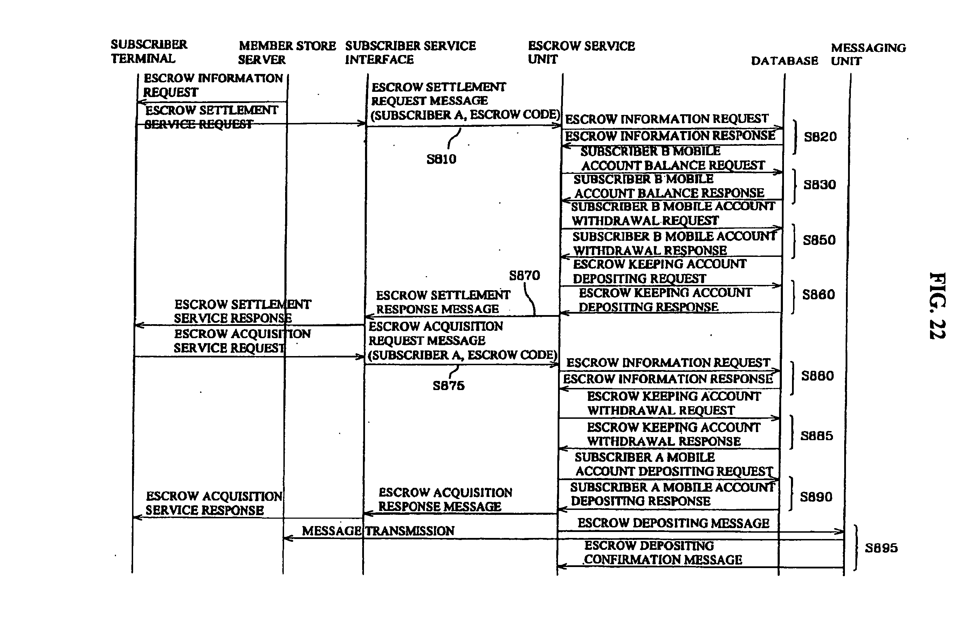

Fig. 22 is a view illustrating message flow of the escrow service of Fig. 11.

When the subscriber (subscriber A) who intends to purchase goods receives an escrow code from the member store subscriber (subscriber A) who intends to sell the goods, temporarily settles an account through the escrow service, and notifies the seller reception of the goods, the settlement is finished.

Firstly, subscriber B receiving the escrow code accesses the subscriber service interface 160 through the subscriber terminal and requests the escrow settlement service. Here, subscriber B transmits a cellular phone number, user ID, password and escrow code to the subscriber service interface 160. The subscriber service interface 160 transmits an escrow settlement request message to the escrow service unit 133 on the basis of the input information (S810).

The escrow service unit 133 refers to the database 110 to judge whether the escrow code included in the escrow settlement request message is valid (S820). When the escrow code is valid, the escrow service unit 133 confirms escrow contents (S820) and the balance of the mobile account of subscriber B (S830). When the balance is sufficient for the escrow settlement, the escrow service unit 133 withdraws settlement money from the mobile account of subscriber B (S850), and deposits it to the escrow account (S860). Here, when the balance of the mobile account of subscriber B is deficient, the automatic charging is performed as shown in Fig. 18.

The escrow service unit 133 transmits an escrow settlement response message to the subscriber service interface 160 (S870). The subscriber service interface 160 responds to the subscriber terminal in regard to the escrow settlement service.

When subscriber B receives the goods, the subscriber accesses the subscriber service interface 160 through the subscriber terminal and requests an escrow acquisition service. The subscriber service interface 160 transmits an escrow acquisition request message to the escrow service unit 133 on the basis of the escrow code inputted from the subscriber terminal (S875).

The escrow service unit 133 receiving the escrow acquisition request message inquires the escrow contents from the database 110 on the basis of the escrow code contained in the message (S880), withdraws the balance of the escrow account corresponding to the escrow contents (S885), and deposits it to the mobile account of subscriber A (S890).

Thereafter, the escrow service unit 133 transmits an escrow acquisition response message to the subscriber service interface 160. The subscriber service interface 160 responds to the escrow acquisition service through the terminal of subscriber B. In addition, the escrow service unit 133 transmits an escrow deposit message through the messaging unit 170. The messaging unit 170 transmits the escrow deposit message to the member store server, and also transmits an escrow depositing confirmation message to the escrow service unit 133.

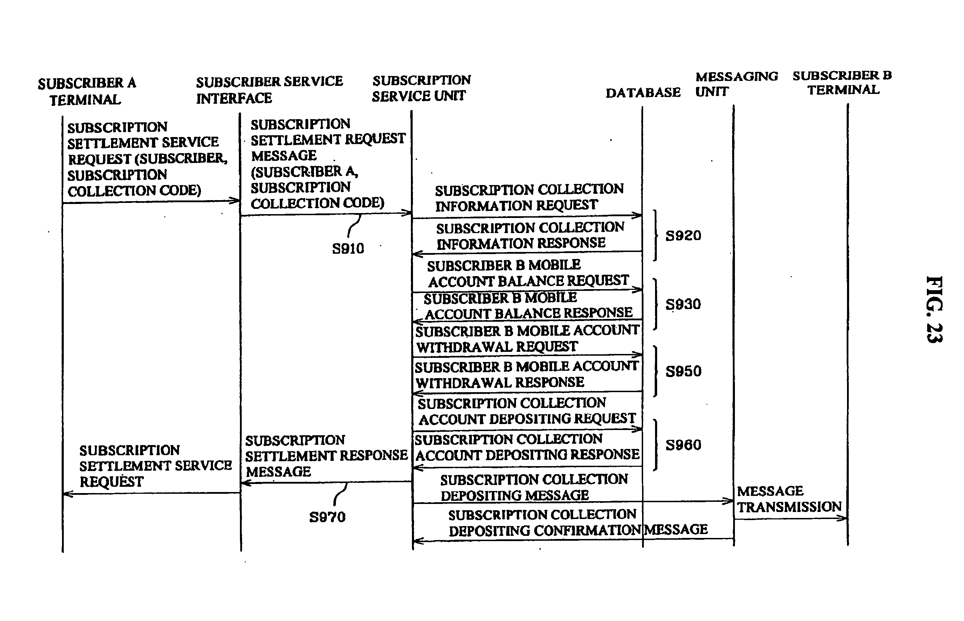

Fig. 23 is a view illustrating message flow of the subscription service of Fig. 12.

Here, the subscriber who intends to collect subscriptions receives a subscription collection code and provides it to other subscribers, and the subscriber who intends to purchase subscriptions make the purchase according to the subscription collection code.

Firstly, the subscriber (subscriber A) who intends to purchase subscriptions accesses the subscriber service interface 160 through the subscriber terminal and requests the subscription service. Here, subscriber B transmits a cellular phone number, user ID, password and subscription collection code to the subscriber service interface 160. The subscriber service interface 160 transmits a subscription settlement request message to the subscription service unit 135 on the basis of the input information (S910).

The subscription service unit 135 refers to the database 110 to judge whether the subscription collection code included in the subscription settlement request message is valid (S920). When the subscription collection code is valid, the subscription service unit 135 confirms subscription collection contents (S920) and the balance of the mobile account of subscriber B (S930). When the balance is sufficient for the subscription settlement, the subscription service unit 135 withdraws settlement money (subscription money) from the mobile account of subscriber B (S950), and deposits it to a subscription collection account (S960). Here, when the balance of the mobile account of subscriber B is deficient, the automatic charging is performed as shown in Fig. 18.

The subscription service unit 135 transmits a subscription settlement response message to the subscriber service interface 160 (S970). The subscriber service interface 160 responds to the subscriber terminal in regard to the subscription settlement service. In addition, the subscription service unit 135 transmits a subscription collection depositing message through the messaging unit 170. The messaging unit 170 transmits the message to the terminal of the subscriber who collects subscriptions, and also transmits a subscription collection confirmation message to the subscription service unit 135.

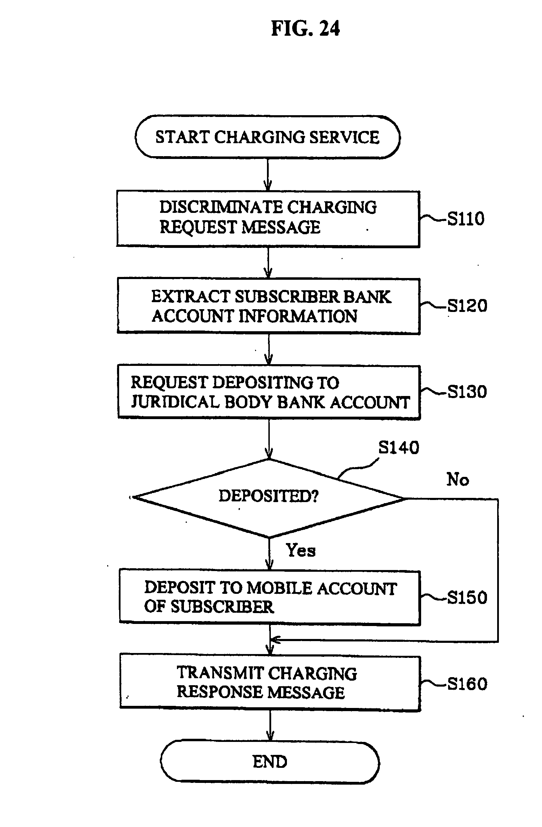

Fig. 24 is a flowchart showing a detailed operation of the charging service unit 123 of Fig. 4.

The charging service unit 123 discriminates a charging request message (S110). Here, the charging service unit 123 extracts a cellular phone number, user ID, password and charging money included in the charging request message.

Thereafter, the charging service unit 123 extracts the bank account information of the subscriber from the database 110 on the basis of the cellular phone number or user ID information of the subscriber (S120). In addition, the charging service unit 123 demands the settlement system of the corresponding bank to deposit charging money to the juridical body account according to the bank account information of the subscriber (S 130).

The charging service unit 123 confirms whether charging money is transferred from the bank account of the subscriber to the juridical body account (S140). When charging money is normally deposited, the charging service unit 123 deposits charging money to the mobile account of the subscriber (S150), and transmits a charging response message to the subscriber (S160). In order to charge the mobile account of the subscriber, charging money is transferred from the juridical body service account.

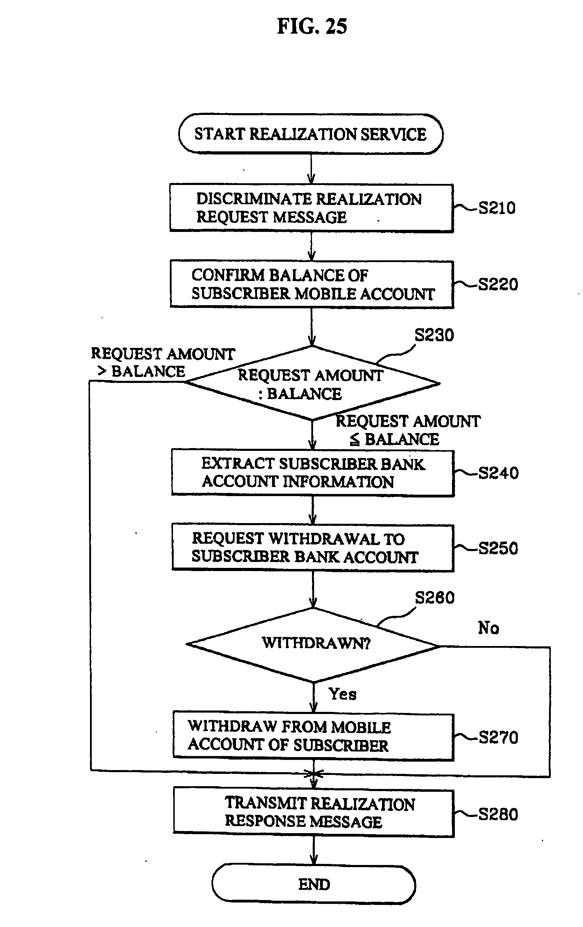

Fig. 25 is a flowchart showing a detailed operation of the realization service unit 124 of Fig. 5.

The realization service unit 124 discriminates a realization request message (S210). Here, the realization service unit 124 extracts a cellular phone number, user ID, password and realization amount included in the realization request message.

Thereafter, the realization service unit 124 confirms the balance of the mobile account of the subscriber on the basis of the cellular phone number or user ID information of the subscriber (S220). Here, when the balance of the mobile account of the subscriber is sufficient for the realization, the realization service unit 124 refers to the database 110 and extracts the bank account information of the subscriber (S240). In addition, the realization service unit 124 demands the bank settlement system through the service/banking interface 150 to transfer realization money from the juridical body account to the bank account of the subscriber according to the bank account information of the subscriber (S250).

The realization service unit 124 confirms whether realization money is transferred from the juridical body account to the bank account of the subscriber (S260). When realization money is normally withdrawn, the realization service unit 124 withdraws realization money from the mobile account of the subscriber, and deposits it to the juridical body service account (S270). The realization service unit 124 transmits a realization response message to the subscriber (S280).

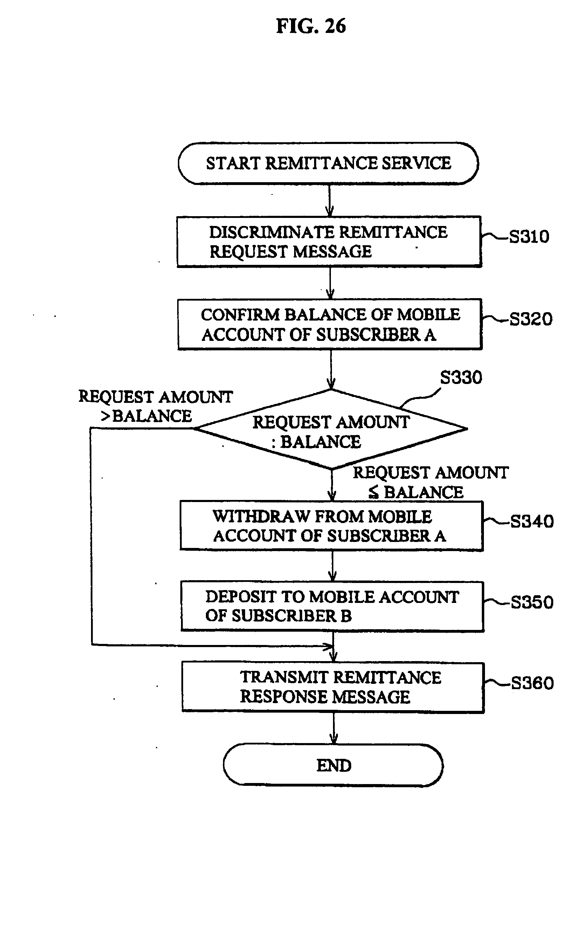

Fig. 26 is a flowchart showing a detailed operation of the remittance service unit 125 of Fig. 6.

The remittance service unit 125 discriminates a remittance request message (S310). Here, the remittance service unit 125 extracts a cellular phone number, user ID, password and remittance amount included in the remittance request message.

Thereafter, the remittance service unit 125 confirms the balance of the mobile account of the subscriber on the basis of the cellular phone number or user ID information of the subscriber (S320). At this time, the remittance service unit 125 judges whether the balance of the mobile account of the subscriber is sufficient to perform the remittance service (S330). When the balance is sufficient, the remittance service unit 125 withdraws remittance money from the mobile account of the subscriber (S340). Then, the remittance service unit 125 deposits remittance money to the mobile account of the subscriber receiving money (S350). When money is normally remitted, the remittance service unit 125 transmits a remittance response message to the subscriber (S360).

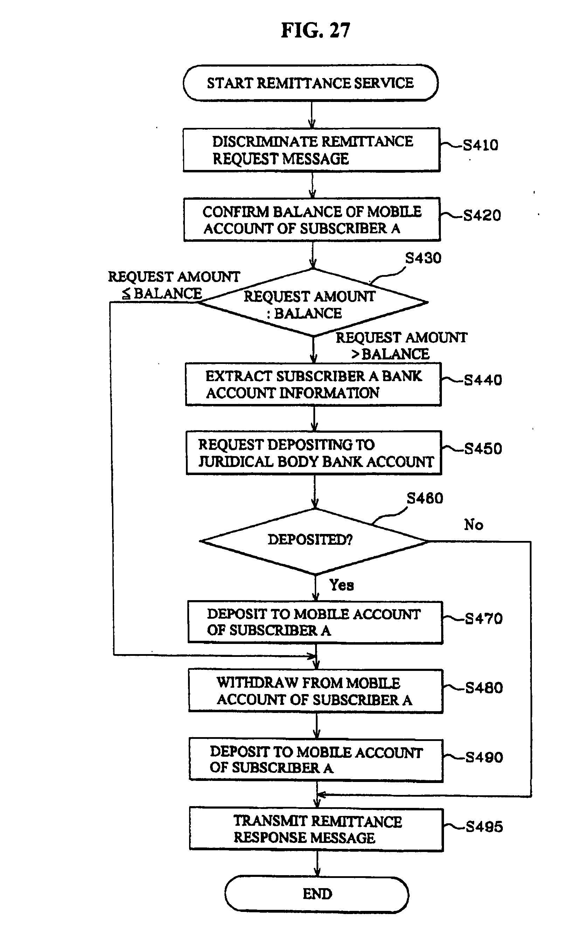

Fig. 27 is a flowchart showing a detailed operation of the remittance service unit 126 of Fig. 7.

The remittance service unit 126 discriminates a remittance request message (S410). Here, the remittance service unit 126 extracts a cellular phone number, user ID, password and remittance amount included in the remittance request message.

Thereafter, the remittance service unit 126 confirms the balance of the mobile account of the subscriber on the basis of the cellular phone number or user ID information of the subscriber (S420). At this time, the remittance service unit 126 judges whether the balance of the mobile account of the subscriber is sufficient to perform the remittance service (S430). When the balance is not sufficient, the remittance service unit 126 extracts the bank account information of the subscriber (S440). In addition, the remittance service unit 126 demands the bank account of the subscriber to treat charging money from to the juridical body bank account according to the bank information of subscriber A (S450).

The remittance service unit 126 refers to the juridical body account, and judges whether remittance money is transferred from the bank account of subscriber A(S460). Here, when money is normally deposited, the remittance service unit 126 transfers remittance money from the juridical body service account to the mobile account of subscriber A (S470). That is, the automatic charging deposits money from the bank account of the subscriber to the mobile account due to deficiency of the balance (S430-S470).

Then, the remittance service unit 126 withdraws remittance money from the mobile account of subscriber A (S480), and deposits it to the mobile account of subscriber B (S490). The remittance service unit 126 transmits a remittance response message to the subscriber (S495).

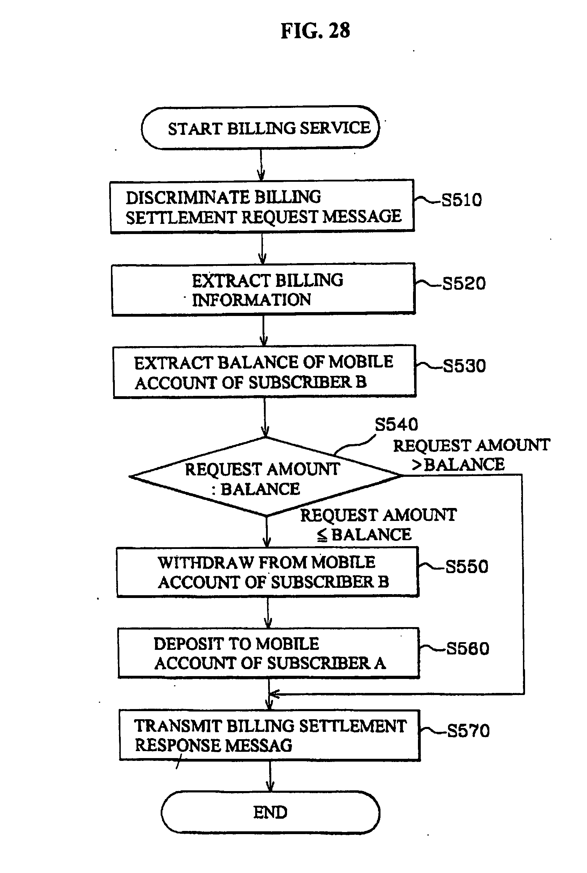

Fig. 28 is a flowchart showing a detailed operation of the billing service unit 127 of Fig. 8.

The billing service unit 127 discriminates a billing settlement request message (S510). Here, the billing service unit 127 extracts a cellular phone number, user ID, password and billing code included in the billing settlement request message.

Thereafter, the billing service unit 127 extracts billing contents from the database 110 on the basis of the billing code of the subscriber (S520). In addition, the billing service unit 127 confirms the balance of the mobile account of subscriber B (payer) according to the cellular phone number or user ID information (S530). When the balance of the mobile account of subscriber B is sufficient for the billing settlement, the billing service unit 127 withdraws billing money from the mobile account of subscriber B (S550), and deposits it to the mobile account of subscriber A (claimant) (S560). Here, when the balance of the mobile account of subscriber B is deficient, the automatic charging is performed as shown in Fig. 27.

When the billing settlement is normally performed, the billing service unit 127 transmits a billing settlement response message to the subscriber (S570).

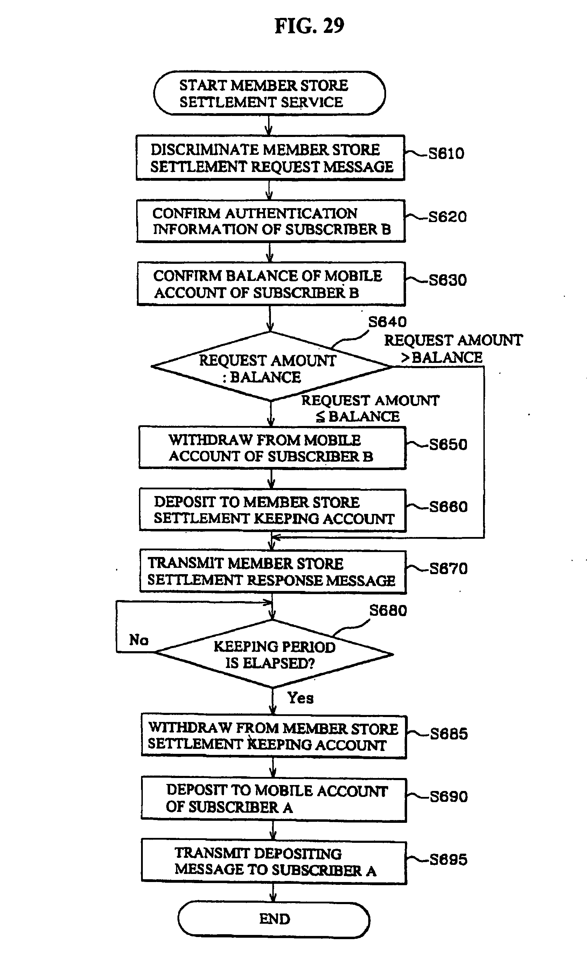

Fig. 29 is a flowchart showing a detailed operation of the member store settlement service unit 129 of Fig. 9.

The member store settlement service unit 129 discriminates a member store settlement request message (S610). Here, the member store settlement service unit 129 extracts a cellular phone number, user ID, password, authentication number and settlement amount included in the member store settlement request message.

The member store settlement service unit 129 refers to the database 110 to judge whether the extracted authentication code is valid (S620). When the authentication code is valid, the member store settlement service unit 129 confirms the balance of the mobile account of subscriber B (purchaser) (S630). When the balance of the mobile account of subscriber B is sufficient for settlement, the member store settlement service unit 129 withdraws settlement money from the mobile account of subscriber B (S650), and temporarily holds it in the member store settlement keeping account (S660). Here, when the balance of the mobile account of subscriber B is deficient, the automatic charging is performed as shown in Fig. 27.

Thereafter, the member store settlement service unit 129 transmits a member store settlement response message to the member store server (subscriber A) (S670).

The member store settlement service unit 129 withdraws settlement money from the member store settlement keeping account after a predetermined holding period (for example, 3 days) (S685), and deposits it to the mobile account of subscriber A (S690). Then, the member store settlement service unit 129 transmits a deposit message to subscriber A (S695).

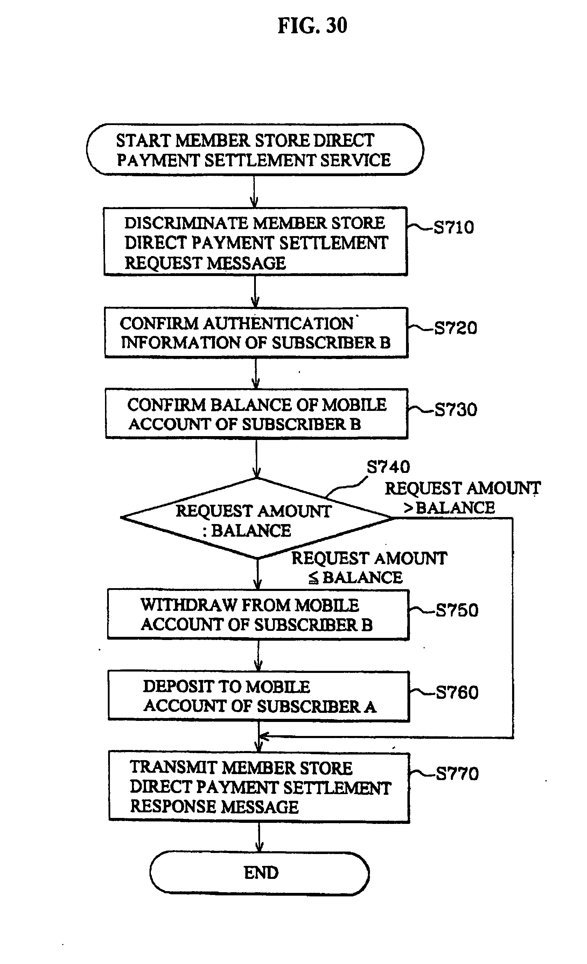

Fig. 30 is a flowchart showing a detailed operation of the member store direct payment service unit 131 of Fig. 10.

The member store direct payment settlement service unit 131 discriminates a member store direct payment settlement request message (S710). Here, the member store direct payment settlement service unit 131 extracts a cellular phone number, user ID, password, authentication number and settlement amount included in the member store direct payment settlement request message.

The member store direct payment settlement service unit 131 refers to the database 110 to judge whether the authentication code extracted from the member store direct payment settlement request message is valid (S720). When the authentication code is valid, the member store direct payment settlement service unit 131 confirms the balance of the mobile account of subscriber B (S730). When the balance of the mobile account of subscriber B is sufficient for settlement, the member store direct payment settlement service unit 131 withdraws settlement money from the mobile account of subscriber B (S750), and deposits it to the mobile account of subscriber A (S760). Here, when the balance of the mobile account of subscriber B is deficient, the automatic charging is performed as shown in Fig. 27.

Thereafter, the member store direct payment settlement service unit 131 transmits a member store direct payment settlement response message to the member store server (subscriber A) (S770).

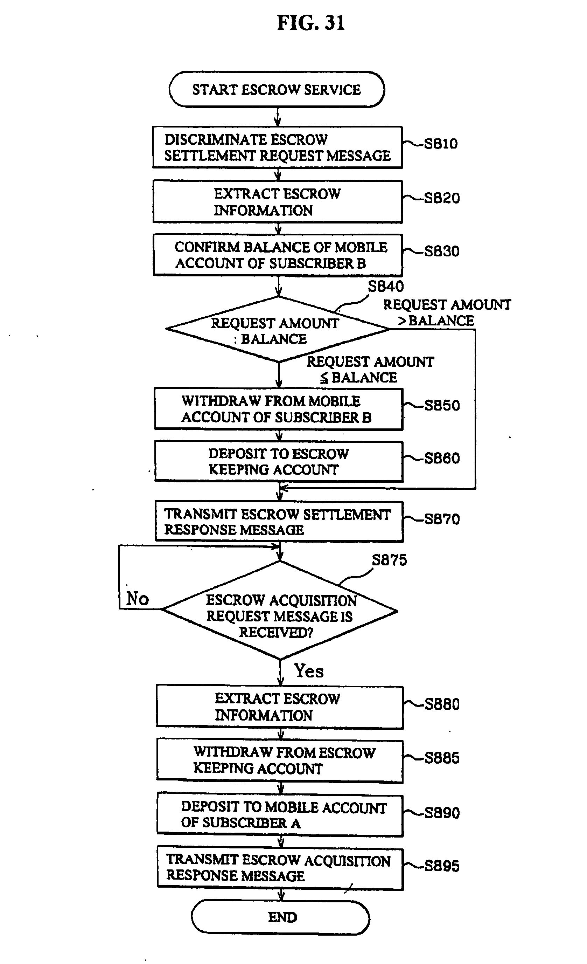

Fig. 31 is a flowchart showing a detailed operation of the escrow service unit 133 of Fig. 11.

The escrow service unit 133 discriminates an escrow settlement request message (S810). Here, the escrow service unit 133 extracts a cellular phone number, user ID, password and escrow code included in the escrow settlement request message.

The escrow service unit 133 refers to the database 110 on the basis of the escrow code extracted from the escrow settlement request message, and extracts escrow contents corresponding to the escrow code (S820). In addition, the escrow service unit 133 confirms the balance of the mobile account of subscriber B (S830). When the balance of the mobile account of subscriber B is sufficient for settlement, the escrow service unit 133 withdraws settlement money from the mobile account of subscriber B (S850), and deposits it to the escrow account (S860). Here, when the balance of the mobile account of subscriber B is deficient, the automatic charging is performed as shown in Fig. 27.

When the settlement amount is deposited in the escrow account, the escrow service unit 133 transmits an escrow settlement response message to subscriber B (S870).

When the escrow service unit 133 receives an escrow acquisition request message from subscriber B (S875), the escrow service unit 133 extracts the escrow contents on the basis of the escrow code included in the escrow acquisition request information (S880). Then, the escrow service unit 133 withdraws settlement money from the escrow account (S885), and deposits it to the mobile account of subscriber A (S890). At last, the escrow service unit 133 transmits an escrow acquisition response message to subscriber B (S895).

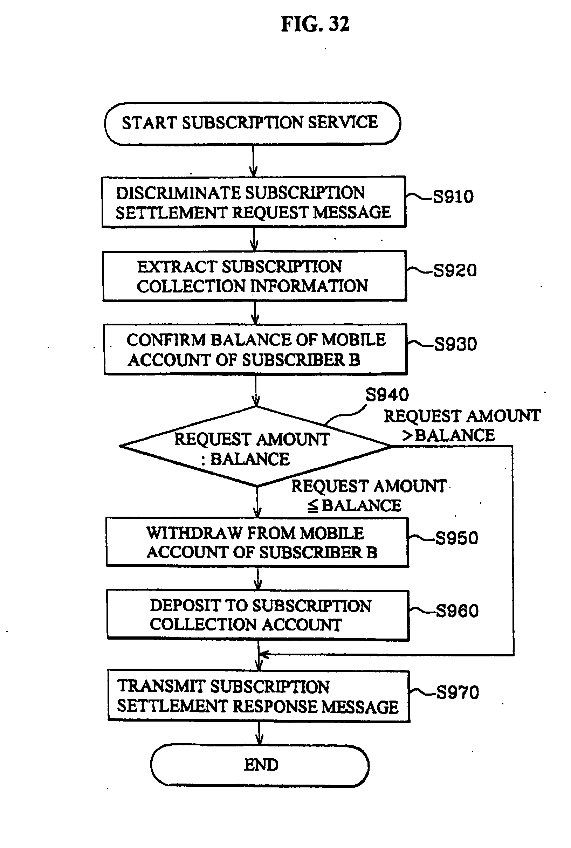

Fig. 32 is a flowchart showing a detailed operation of the subscription service unit 135 of Fig. 12.

The subscription service unit 135 discriminates a subscription settlement request message (S910). Here, the subscription service unit 135 extracts a cellular phone number, user ID, password and subscription collection code included in the subscription settlement request message.

The subscription service unit 135 extracts subscription collection information from the database 110 on the basis of the subscription collection code extracted from the subscription settlement request message (S920). In addition, the subscription service unit 135 confirms the balance of the mobile account of subscriber B who intends to purchase subscriptions (S930). When the balance of the mobile account of subscriber B is sufficient for settlement, the subscription service unit 135 withdraws settlement money from the mobile account of subscriber B (S950), and deposits it to the subscription collection account (S960). Here, when the balance of the mobile account of subscriber B is deficient, the automatic charging is performed as shown in Fig. 27.

Thereafter, the subscription service unit 135 transmits a subscription settlement response message to the subscriber (S970).

In accordance with the present invention, the subscribers can transfer money by using the juridical body account (intermediate account) of the affiliated bank. In accordance with the present invention, money is deposited from the bank account of the subscriber who intends to remit money to the juridical body account of the corresponding bank, and then remittance money is transferred from the juridical body account of another bank to the account of the subscriber who receives money, which does not incur expenses (remittance fee).

As discussed earlier, in accordance with the present invention, the B to P or the P to P commerce employs various settlement methods through the portable terminal. Moreover, the virtual account is issued to the mobile terminal subscriber, and money is freely transferred between the virtual account and the real account of the bank.

As a result, it is easy to perform charging, realization, billing, settlement, escrow settlement and subscription between the mobile terminal subscribers. In addition, the financial transactions are executed through the portable terminal, thereby improving security and easily settling an account.

## Claims

1. A transaction system (100) for providing a financial transaction service to a subscriber,
said transaction system (100) comprising:
(a) a service control unit (120) which processes financial transaction services for the subscriber;
(b) a subscriber service interface (160) for providing a service menu to a mobile terminal of the subscriber through a communication network (200) and for outputting (S110; S210) a corresponding charging or realization service request message to said service control unit (120) to provide a corresponding financial transaction service when an item of said service menu is selected;
(c) a transaction service interface (150) connecting said service control unit (120) by means of a financial network (300) to at least one bank settlement system (410; 420) which upon a settlement request message transmitted by said service control unit (120) by means of said financial network (300) to said bank settlement system (410; 420) processes a first transfer of money between a bank account of the juridical body providing the financial transaction service opened in said bank settlement system (410; 420) and a bank account of the subscriber; and
(d) a database (110) for storing data processed in said service control unit (120), said database (110) including a service account of the juridical body providing the financial transaction service and a mobile account granted to a cellular phone number of a mobile terminal of the subscriber, wherein the service control unit (120) processes a second transfer of a corresponding amount of money between the service account of the juridical body providing the financial transaction service and the mobile account of the subscriber.

2. The transaction system according to claim 1, amount of money wherein said communication network (200) comprises:
a mobile communication network, : charging or
an internet network providing an internet service or realization a public switched telephone network (PSTN) for providing a public telephone service.

3. The transaction system according to claim 1, wherein the mobile terminal of the subscriber comprises:
a mobile communication terminal,
a computer or
a telephone.

4. The system according to claim 1, further comprising a messaging unit (170) for transmitting a financial transaction request and a processing result to the mobile terminal of the subscriber through an E-mail or SMS.

5. The system according to claim 1, wherein the service control unit (120) comprises a code issuing service unit (122) for issuing at least one of an authentication code for authenticating the subscriber, a billing code for discriminating transactions, an escrow code and a subscription collection code.

6. The system according to claim 1, wherein the service control unit (120) comprises a realization service unit (124) for performing a transfer service when the subscriber intends to realize money from the mobile account of the subscriber to the bank account of the subscriber

7. The system according to claim 1, wherein the service control unit (120) comprises a remittance service unit (126) for performing a transfer service when the subscriber intends to remit money from the mobile account of the subscriber to the mobile account of another subscriber.

8. The system according to claim 1, wherein the service control unit (120) comprises a member store settlement service unit (129) for temporarily settling settlement money from the mobile account of the subscriber who intends to settle an account upon the request of a member store which demands the settlement, and completing the settlement after a predetermined setup period by transferring settlement money to the mobile account of the subscriber who requests the settlement.

9. The system according to claim 1, wherein the service control unit (120) comprises a member store direct payment settlement service unit (131) for directly transferring settlement money from the mobile account of the subscriber who intends to settle an account to the mobile account of the subscriber who requests the settlement upon the request of a member store which demands the settlement.

10. The system according to claim 1, wherein the service control unit (120) comprises an escrow service unit (123) for temporarily settling money from the mobile account of the subscriber who intends to settle an account upon the request of the subscriber who intends to settle the account, and completing the settlement by transferring settlement money to the mobile account of the subscriber who requests the settlement, when the subscriber who intends to settle the account notifies reception of goods.

11. The system according to claim 1, wherein the service control unit (120) comprises a billing service unit (127) for issuing a settlement code to the subscriber who requests settlement, storing billing contents corresponding to the settlement code, transmitting the billing contents to the subscriber who intends to settle an account, and transferring settlement money from the mobile account of the subscriber who intends to settle the account to the mobile account of the subscriber who requests the settlement upon the request of the subscriber who intends to settle the account.

12. The system according to claim 1, wherein the service control unit (120) comprises a subscription service unit (135) for issuing a subscription collection code to the subscriber who intends to collect subscription, storing subscription collection contents corresponding to the subscription collection code, and transferring money from the mobile account of the subscriber who intends to purchase subscriptions to the mobile account of the subscriber who intends to collect subscriptions.

## Patentansprüche

1. Transaktionssystem (100) für die Erbringung eines Finanztransaktionsservice für einen Abonnenten,
wobei das Transaktionssystem (100) Folgendes umfasst:
(a) eine Servicesteuereinheit (120), die Finanztransaktionsserviceleistungen für den Abonnenten verarbeitet;
(b) eine Abonnentenserviceschnittstelle (160) zum Übermitteln eines Servicemenüs an ein mobiles Endgerät des Abonnenten über ein Kommunikationsnetz (200) und zum Ausgeben (S110; S210) einer entsprechenden Belastungs- oder Realisierungsserviceanforderungsmeldung an die Servicesteuereinheit (120), einen entsprechenden Finanztransaktionsservice zu erbringen, wenn ein Punkt aus dem Servicemenü ausgewählt wird;
(c) eine Transaktionsserviceschnittstelle (150), welche die Servicesteuereinheit (120) mittels eines Finanznetzwerks (300) mit mindestens einem Bankabrechnungssystem (410; 420) verbindet, das in Reaktion auf eine Abrechnungsanforderungsmeldung, die durch die Servicesteuereinheit (120) mittels des Finanznetzwerks (300) an das Bankabrechnungssystem (410; 420) übertragen wurde, einen ersten Geldtransfer zwischen einem in dem Bankabrechnungssystem (410; 420) eröffneten Bankkonto der Rechtsinstanz, die den Finanztransaktionsservice erbringt, und einem Bankkonto des Abonnenten verarbeitet; und
(d) eine Datenbank (110) zum Speichern von in der Servicesteuereinheit (120) verarbeiteten Daten, wobei die Datenbank (110) ein Servicekonto der Rechtsinstanz, die den Finanztransaktionsservice erbringt, und ein Mobilkonto, das für eine Mobilfunknummer eines mobilen Endgerätes des Abonnenten eingerichtet wurde, enthält, wobei die Servicesteuereinheit (120) einen zweiten Transfer eines entsprechenden Geldbetrages zwischen dem Servicekonto der Rechtsinstanz, die den Finanztransaktionsservice erbringt, und dem Mobilkonto des Abonnenten verarbeitet.

2. Transaktionssystem nach Anspruch 1, wobei das Kommunikationsnetz (200) ein Mobilkommunikationsnetz, ein Internet-Netzwerk, das einen Internet-Service bereitstellt, oder ein öffentliches Fernsprechwählnetz (ÖFWN) zum Bereitstellen eines öffentlichen Telefondienstes umfasst.

3. Transaktionssystem nach Anspruch 1, wobei das mobile Endgerät des Abonnenten ein Mobilkommunikations-Endgerät, einen Computer oder ein Telefon umfasst.

4. System nach Anspruch 1, das des Weiteren eine Nachrichtenübermittlungseinheit (170) umfasst, um per E-Mail oder SMS eine Finanztransaktionsanforderung und ein Verarbeitungsergebnis an das mobile Endgerät des Abonnenten zu senden.

5. System nach Anspruch 1, wobei die Servicesteuereinheit (120) eine Codeausgabeserviceeinheit (122) umfasst, um einen Authentifizierungscode zum Authentifizieren des Abonnenten und/oder einen Gebührenberechnungscode zum Unterscheiden von Transaktionen und/oder einen Treuhandcode und/oder einen Abonnementeinziehungscode auszugeben.

6. System nach Anspruch 1, wobei die Servicesteuereinheit (120) eine Realisierungsserviceeinheit (124) umfasst, um einen Transferservice auszuführen, wenn der Abonnent beabsichtigt, Geld von dem Mobilkonto des Abonnenten auf das Bankkonto des Abonnenten zu realisieren.

7. System nach Anspruch 1, wobei die Servicesteuereinheit (120) eine Überweisungsserviceeinheit (126) umfasst, um einen Transferservice auszuführen, wenn der Abonnent beabsichtigt, Geld von dem Mobilkonto des Abonnenten auf das Mobilkonto eines anderen Abonnenten zu überweisen.

8. System nach Anspruch 1, wobei die Servicesteuereinheit (120) eine Mitgliederverkaufsstellen-Abrechnungsserviceeinheit (129) umfasst, um Abrechnungsgeld von dem Mobilkonto des Abonnenten, der auf Verlangen einer die Abrechnung fordernden Mitgliederverkaufsstelle eine Rechnung begleichen will, vorübergehend abzurechnen und die Abrechnung nach einem vorgegebenen Einrichtungszeitraum abzuschließen, indem Abrechnungsgeld auf das Mobilkonto des die Abrechnung verlangenden Abonnenten transferiert wird.

9. System nach Anspruch 1, wobei die Servicesteuereinheit (120) eine Mitgliederverkaufsstellen-Direktzahlungsabrechnungsserviceeinheit (131) umfasst, um Abrechnungsgeld von dem Mobilkonto des Abonnenten, der eine Rechnung begleichen will, direkt auf das Mobilkonto des Abonnenten, der auf Verlangen einer die Abrechnung fordernden Mitgliederverkaufsstelle die Abrechnung verlangt, zu transferieren.

10. System nach Anspruch 1, wobei die Servicesteuereinheit (120) eine Treuhand-Serviceeinheit (123) umfasst, um Geld von dem Mobilkonto des Abonnenten, der auf Verlangen des Abonnenten, der eine Rechnung begleichen will, die Rechnung begleichen will, vorübergehend abzurechnen und die Abrechnung abzuschließen, indem Abrechnungsgeld auf das Mobilkonto des Abonnenten, der die Abrechnung verlangt, transferiert wird, wenn der Abonnenten, der die Rechnung begleichen will, den Erhalt von Waren meldet.

11. System nach Anspruch 1, wobei die Servicesteuereinheit (120) eine Gebührenberechnungs-Serviceeinheit (127) umfasst, um einen Abrechnungscode an den Abonnenten, der eine Abrechnung verlangt, auszugeben; einen dem Abrechnungscode entsprechenden Gebührenberechnungsinhalt zu speichern; den Gebührenberechnungsinhalt an den Abonnenten, der eine Rechnung begleichen will, zu übermitteln; und Abrechnungsgeld von dem Mobilkonto des Abonnenten, der die Rechnung begleichen will, auf das Mobilkonto des Abonnenten, der auf Verlangen des Abonnenten, der die Rechnung begleichen will, die Abrechnung verlangt, zu transferieren.

12. System nach Anspruch 1, wobei die Servicesteuereinheit (120) eine Abonnement-Serviceeinheit (135) umfasst, um einen Abonnementeinziehungscode an den Abonnenten, der ein Abonnement einziehen will, auszugeben; einen dem Abonnementeinziehungscode entsprechenden Abonnementeinziehungsinhalt zu speichern; und Geld von dem Mobilkonto des Abonnenten, der Abonnements kaufen will, auf das Mobilkonto des Abonnenten, der Abonnements einziehen will, zu transferieren.

## Revendications

1. Système de transaction (100) destiné à fournir un service de transaction financière à un abonné,
ledit système de transaction (100) comprenant :
(a) une unité de commande de service (120) qui traite des services de transaction financières pour l'abonné ;
(b) une interface de service à l'abonné (160) destinée à fournir un menu de services à un terminal mobile de l'abonné par l'intermédiaire d'un réseau de communication (200) et à produire (S110 ; S210) un message de requête de service de facturation ou de réalisation correspondant à ladite unité de commande de service (120) pour fournir un service de transaction financière quand un point dudit menu de service est sélectionné ;
(c) une interface de service de transaction (150) connectant ladite unité de commande de service (120) au moyen d'un réseau financier (300) à au moins un système de règlement bancaire (410 ; 420) qui, sur un message de requête de règlement transmis par ladite unité de commande de service (120) au moyen dudit réseau financier (300) audit système de règlement bancaire (410 ; 420), procède à un premier transfert d'argent entre un compte bancaire de la personne juridique fournissant le service de transaction financière ouvert dans ledit système de règlement bancaire (410 ; 420) et un compte bancaire de l'abonné ; et
(d) une base de données (110) destinée à stocker des données traitées dans ladite unité de commande de service (120), ladite base de données (110) comprenant un compte de service de la personne juridique fournissant le service de transaction financière et un compte mobile octroyé à un numéro de téléphone cellulaire d'un terminal mobile de l'abonné, dans lequel l'unité de commande de service (120) procède à un second transfert d'un montant d'argent correspondant entre le compte de service de la personne juridique fournissant le service de transaction financière et le compte mobile de l'abonné.

2. Système de transaction selon la revendication 1, dans lequel ledit réseau de communication (200) comprend un réseau de communication mobile, un réseau internet fournissant un service internet, ou un Réseau Téléphonique Commuté Public (RTCP) destiné à fournir un service téléphonique public.

3. Système de transaction selon la revendication 1, dans lequel le terminal mobile de l'abonné comprend un terminal de communication mobile, un ordinateur ou un téléphone.

4. Système selon la revendication 1, comprenant en outre une unité de messagerie (170) destinée à transmettre une requête de transaction financière et un résultat de traitement au terminal mobile de l'abonné par l'intermédiaire d'un e-mail ou d'un SMS.

5. Système selon la revendication 1, dans lequel l'unité de commande de service (120) comprend une unité de service d'émission de code (122) destinée à émettre au moins un code d'authentification destiné à authentifier l'abonné, un code de facturation de manière à distinguer les transactions, un code d'entiercement et un code de collecte d'abonnement.

6. Système selon la revendication 1, dans lequel l'unité de commande de service (120) comprend une unité de service de réalisation (124) destinée à effectuer un service de transfert quand l'abonné a l'intention de réaliser de l'argent du compte mobile de l'abonné au compte bancaire de l'abonné.

7. Système selon la revendication 1, dans lequel l'unité de commande de service (120) comprend une unité de service de versement (126) destinée à effectuer un service de transfert quand l'abonné a l'intention de verser de l'argent du compte mobile de l'abonné vers le compte bancaire d'un autre abonné.

8. Système selon la revendication 1, dans lequel l'unité de commande de service (120) comprend une unité de service de traitement des magasins membres (129) destinée à régler temporairement l'argent du compte mobile de l'abonné qui a l'intention de régler un compte sur requête d'un magasin membre qui réclame le règlement, et terminer le règlement après une période de configuration prédéterminée en transférant l'argent du règlement au compte mobile de l'abonné qui réclame de règlement.

9. Système selon la revendication 1, dans lequel l'unité de commande de service (120) comprend une unité de service de traitement de paiement direct des magasins membres (131) destinée à transférer directement l'argent de règlement du compte mobile de l'abonné qui a l'intention de régler un compte au compte mobile de l'abonné qui réclame le règlement sur requête d'un magasin membre qui réclame le règlement.

10. Système selon la revendication 1, dans lequel l'unité de commande de service (120) comprend une unité de service de traitement des magasins membres (123) destinée à régler temporairement l'argent du compte mobile de l'abonné qui a l'intention de régler un compte sur requête de l'abonné qui a l'intention de régler le compte, et terminer le règlement en transférant l'argent du règlement au compte mobile de l'abonné qui réclame de règlement, quand l'abonné qui a l'intention de régler le compte confirme la réception des marchandises.

11. Système selon la revendication 1, dans lequel l'unité de commande de service (120) comprend une unité de service de facturation (127) destinée à émettre un code de règlement à l'abonné qui réclame le règlement, stocker les contenus de facturation correspondant au code de règlement, transmettre les contenus de facturation à l'abonné qui a l'intention de régler un compte, et transférer l'argent de règlement du compte mobile de l'abonné qui a l'intention de régler le compte de l'abonné qui réclame le règlement sur requête de l'abonné qui a l'intention régler le compte.

12. Système selon la revendication 1, dans lequel l'unité de commande de service (120) comprend une unité de service d'abonnement (135) destinée à émettre un code de collecte d'abonnement à l'abonné qui a l'intention de collecter un abonnement, stocker les contenus de collecte d'abonnement correspondant au code de collecte d'abonnement, et transférer de l'argent du compte mobile de l'abonné qui a l'intention d'acheter par abonnement au compte mobile de l'abonné qui a l'intention de collecter des abonnements.
